(19) Europäisches Patentamt
European Patent Office
Office européen des brevets

(11) **EP 2 541 377 A1**

(12) **EUROPEAN PATENT APPLICATION**
published in accordance with Art. 153(4) EPC

(43) Date of publication:
**02.01.2013 Bulletin 2013/01**

(51) Int Cl.:
***G06F 3/041*** (2006.01)   ***G06F 3/048*** (2013.01)

(21) Application number: **11747054.2**

(22) Date of filing: **24.02.2011**

(86) International application number:
**PCT/JP2011/001058**

(87) International publication number:
**WO 2011/105087 (01.09.2011 Gazette 2011/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.02.2010   JP 2010041200**

(71) Applicant: **Capcom Co., Ltd.
Chuo-ku
Osaka-shi
Osaka 540-0037 (JP)**

(72) Inventors:
• **TEZUKA, Takeshi
Osaka 540-0037 (JP)**
• **ISHIKAWA, Yoshiyuki
Osaka 540-0037 (JP)**

(74) Representative: **Leinweber & Zimmermann
Rosental 7, II. Aufgang
80331 München (DE)**

(54) **COMPUTER DEVICE, STORAGE MEDIUM, AND CONTROL METHOD**

(57)   A computer device is provided, in which in a case where a user manipulates characters displayed on a touch screen via a manipulation section displayed on the display, the user can easily figure out images located behind and overlapping with the manipulation section. A game machine 1 includes a virtual manipulation section display module (virtual manipulation section display means) 33 for displaying on a touch screen 2, a virtual manipulation section 42 which accepts a user's manipulation; and a display color changing module (display color changing means) 37a for changing display color information of the virtual manipulation section in response to the user's manipulation.

FIG. 3

EP 2 541 377 A1

## Description

### Technical Field

The present invention relates to a computer device, a storage medium, and a control method in which in a case where a user manipulates characters acting within a virtual space displayed on a touch screen via a manipulandum image displayed on a display, the user can easily figure out another image located behind and overlapping with the manipulandum image.

### Background Art

In recent years, in computer devices such as portable small game devices and cellular phones, a computer program has been provided, which allows a user to manipulate a predetermined manipulandum (e.g., button) to cause characters to act within a virtual game space, thereby proceeding a game. As such a small computer, there is a computer device which employs a touch screen for ensuring a greatest possible display screen, for example. In this computer device, the touch screen replaces a part or all of conventional physical manipulandums. The touch screen includes a display which is a display means and an external input receiving means such as a touch panel which is capable of detecting a touch position onto the display.

For example, Patent Literature 1 discloses that a manipulandum image which serves as a physical manipulandum is displayed on a touch screen included in a computer device to roughly indicate a position at which a user's manipulation is accepted. Specifically, the user performs a predetermined manipulation to touch the manipulandum image on the touch screen, with a tip of the user's finger to enable the computer device to perform a function associated with the manipulandum image. Patent Literature 1 also discloses that a display position, a size and a shape of the manipulandum image can be changed before start of a game to allow the manipulandum image to be manipulated more easily during the game.

### Citation Lists

### Patent Literature

Patent Literature 1: Japanese Patent Publication No. 4243553

### Summary of the Invention

### Technical Problem

When the manipulandum image is displayed on the touch screen as described above, there may be a chance that a part of the virtual game space or the characters cannot be visually recognized, because they are located behind and hidden by the manipulandum image. As a possible solution to this, in the technique disclosed in Patent Literature 1, for example, the position of the manipulandum image may be changed so that the manipulandum image is disposed not overlap with at least the characters. However, in the case of the small computer device such as a portable computer device or a cellular phone, the touch screen has a limited area. Because of this, it is difficult to ensure a space which does not overlap with the characters on the touch screen.

In another technique disclosed in Patent Literature 1, a display size of the manipulandum image may be changed into a smaller size, to minimize a region which cannot be visually recognized due to the manipulandum image. However, as the display size of the manipulandum image is smaller, a tendency that the user cannot manipulate the manipulandum image easily occurs unavoidably.

Accordingly, an object of the present invention is to provide a computer device, a storage medium, and a control method in which in a case where a user manipulates characters displayed on a touch screen via a manipulandum image displayed on the touch screen, the user can easily figure out an image located behind and overlapping with the manipulandum image.

### Solution to Problem

According to the present invention, a computer device comprises a virtual manipulation section display module for displaying on a touch screen a virtual manipulation section which accepts a user's manipulation; and a display color changing module for changing display color information of the virtual manipulation section in response to the user's manipulation.

In such a configuration, by changing the display color, the image(s) (e.g., virtual space and/or characters, etc.) located behind the manipulation section can be visually recognized. This also makes it possible to lessen difficulty with which the user manipulates the manipulation section.

The display color information may include at least one of a degree of transparency, a color phase, a brightness, and a chroma.

The display color information may be the degree of transparency; and wherein the display color changing module may change the display color information of the virtual manipulation section to a content different from a setting content, for a predetermined period of time, when the user manipulates the virtual manipulation section in a state in which the degree of transparency is set to a predetermined value or greater.

The computer device may further comprise a display position changing module for changing a display position of the virtual manipulation section on the touch screen, in response to the user's manipulation.

The computer device may further comprise a shape changing module for changing a shape of the virtual manipulation section, in response to the user's manipulation.

The computer device may further comprise a game control module for proceeding a game in response to the user's manipulation of the virtual manipulation section; and the display color changing module may pause proceeding of the game and accept the user's manipulation about changing of the display color information, in the middle of proceeding of the game.

The computer device may further comprise a game control module for proceeding a game in response to the user's manipulation of the virtual manipulation section; and the display color changing module may display a display color changing manipulation section in a portion of an image in the middle of proceeding of the game which is displayed on the display to accept the user's manipulation about changing of the display color information, in the middle of proceeding of the game.

As described above, in recent years, in computer devices such as portable small game devices and cellular phones, there have been provided computer programs, which allow a user to manipulate specified manipulandum (e.g., button) to cause characters to act within a virtual game space, thereby proceeding a game. There exists a computer in which a touch screen replaces a portion or all of conventional manipulandums.

For example, Patent Literature 1 discloses an invention in which a manipulandum image which replaces the physical manipulandum is displayed on a touch screen included in the computer device. As described above, Patent Literature 1 discloses that the display position, size and shape of the manipulandum image can be changed before start of the game to allow the manipulandum image to be manipulated more easily during the game.

Conventionally, there is a game in which when two manipulandums placed in close proximity are pushed simultaneously, a function (action) different from those in a case where these manipulandums are pushed individually can be performed. For example, in an action game in which a human-like player character is fighting with an enemy human-like character, in a case where the character performs an action of "punch" when a manipulandum A is pushed, and the character performs an action of "kick" when a manipulandum B is pushed, "special move" is performed when the manipulandum A and the manipulandum B are pushed simultaneously.

When two manipulandums are pushed simultaneously, in a case where conventional physical manipulandums are manipulated, a user might push the two manipulandums simultaneously with, for example, a thumb of a right hand. In contrast, in the case where the above stated manipulandum image displayed on the touch screen is manipulated, the user cannot perform a manipulation which is like the manipulation in which the two physical manipulandums are pushed simultaneously with one finger. In other words, in the case of the touch screen of the multi-touch type, the user is required to manipulate the two manipulandum images with two fingers, respectively.

This will be described specifically. When a tip of finger or the like touches the touch screen, one manipulation position corresponding to one touch position (one closed touched region) is detected, and it is determined that a manipulation command is input to this manipulation position of one point. For example, a gravity center position (one point) is detected from one closed touched region, and it is determined that this position is the manipulation position to which the manipulation command is input. Therefore, even when the two manipulandum images are placed in close proximity, the user cannot manipulate these manipulandum images simultaneously with a tip of one finger. For this reason, the user is required to manipulate the two manipulandum images with two fingers to push them simultaneously.

In the above case, the user cannot perform a manipulation similar to that using conventional physical manipulandums, which might make the user feel discomfort in manipulation. In addition, since the user is required to simultaneously push the manipulandum images with two fingers accurately, the user's desired simultaneous push may be unsuccessful. Note that the user can simultaneously push the two manipulandum images with two fingers on the touch screen of the multi-touch type. However, the user cannot simultaneously push two points to input a manipulation command, on a touch screen of a single-touch type. Thus, the user's simultaneous push cannot be implemented.

As a solution to this, there will be hereinafter disclosed a computer device which allows two or more manipulandum images to be pushed simultaneously more easily, in a case where a plurality of manipulandum images are provided on a touch screen.

(1) The computer device comprises a manipulation position detecting module (manipulation position detecting means) for detecting a user's manipulation position on a touch screen, a virtual manipulation section display module (virtual manipulation section display means) for displaying on the touch screen a plurality of virtual manipulation sections which accept the user's manipulation command input to a predetermined manipulation recognition area defined on the touch screen, a manipulation section position/shape changing module (manipulation section position/shape changing means) for changing at least one of a position and a shape of the manipulation recognition area, and a function executing module (function executing means) for executing a predetermined function associated with the manipulation command input accepted by the virtual manipulation section, and the manipulation section position/shape changing module is capable of changing the position or shape of the manipulation recognition area such that portions of the manipulation recognition areas respectively corresponding to the plurality of virtual manipulation sections overlap with each other, and the function executing module determines that the manipulation command is input simultaneously to the plurality of virtual manipulation sections having manipulation recognition areas overlapping with each other, when the manipulation position detecting module detects that the manipulation command is input to the overlapping area of the plurality of manipulation recognition areas, and executes a predetermined function associated with the simultaneous manipulation command input.

The "shape" of the manipulation recognition area which can be changed by the manipulation section position/ shape changing module may include concepts of "direction" and "size" of the manipulation recognition area. In other words, the manipulation section position/shape changing module can change the direction by rotating the manipulation recognition area. The manipulation section position/shape changing module can change the shape of the manipulation recognition area to an analogous (similar) shape with a different dimension. The above stated computer device may be configured to execute computer programs to perform the functions of the above stated modules. The same applies hereinafter.

(2) In the computer device recited in (1), the virtual manipulation section display module may be configured to display a manipulandum image which can be visually recognized by the user, within the manipulation recognition area corresponding to each of the virtual manipulation sections such that the manipulandum image has a smaller area than the manipulation recognition area.

(3) In the computer device recited in (2), the virtual manipulation section display module may be configured to display another manipulandum image within an overlapping area where the plurality of manipulation recognition areas overlap with each other.

In accordance with the above configuration, in a case where a plurality of virtual manipulation sections are provided on the touch screen, it is possible to provide a computer program and a computer device which allow two or more virtual manipulation sections to be pushed simultaneously easily.

The problem that "simultaneous push" cannot be realized with a tip of one finger has been described above. Apart from this, conventionally, there exists a problem that the user can manipulate only a preset (pre-assigned) manipulandum image, and cannot set a new manipulandum image with which a new function is performed according to the user's preference, etc..

As a solution to this, there is disclosed a computer device which is capable of setting a new virtual manipulation section with which a new function can be performed according to the user's manipulation command input, in a case where a plurality of manipulandum images are provided on a touch screen.

(4) The computer device comprises a manipulation position detecting module (manipulation position detecting means) for detecting a user's manipulation position on a touch screen, a virtual manipulation section display module (virtual manipulation section display means) for displaying on the touch screen a plurality of virtual manipulation sections which accept the user's manipulation command input to a predetermined manipulation recognition area defined on the touch screen; a function executing module (function executing means) for executing a predetermined function associated with the manipulation command input accepted by the virtual manipulation section; and a new manipulation recognition area setting module (new manipulation recognition area setting means) which determines whether or not to set an overlapping area of a plurality of manipulation recognition areas as a new manipulation recognition area, when the overlapping area exists.

(5) The computer device comprises a manipulation position detecting module (manipulation position detecting means) for detecting a user's manipulation position on a touch screen, a virtual manipulation section display module (virtual manipulation section display means) for displaying on the touch screen a plurality of virtual manipulation sections which accept the user's manipulation command input to a predetermined manipulation recognition area defined on the touch screen; a function executing module (function executing means) for executing a predetermined function associated with the manipulation command input accepted by the virtual manipulation section; and a new manipulation recognition area setting module (new manipulation recognition area setting means) which assigns to a new manipulation recognition area which is an area where the plurality of manipulation recognition areas overlap with each other, a function executed in response to a manipulation command input to the new manipulation recognition area in response to the user's command, when the new overlapping area exists.

(6) In the computer device of (4) or (5), the new manipulation recognition area setting module may be configured to assign to the new manipulation recognition area, a function different from a preset function performed by manipulating the manipulation recognition areas forming the overlapping area.

(7) In the computer device of (6), the new manipulation recognition area setting module may be configured to assign to the new manipulation recognition area, a predetermined function associated with simultaneous manipulation command input to the manipulation recognition areas forming the overlapping area.

(8) The computer device of (4) to (7) may further comprise a manipulation section position/shape changing module (manipulation section position/shape changing means) for changing at least either one of the position and the shape of the manipulation recognition area in response to the user's manipulation, the manipulation section position/shape changing module is capable of changing the position or shape of the manipulation recognition area such that portions of the manipulation recognition areas respectively corresponding to the plurality of virtual manipulation sections overlap with each other, and the new manipulation recognition area setting module may be configured to set as the new manipulation recognition area, the overlapping area formed by the manipulation section position/shape changing module which has changed the position or shape.

(9) In the computer device of (8), the manipulation section position/shape changing module may change at least a position of the new manipulation recognition area set by the new manipulation recognition area setting module, the position being on the touch screen, independently of the plurality of manipulation recognition areas forming the new manipulation recognition area.

(10) In the computer device according to any one of (4) to (9), the virtual manipulation section display module may be configured to display a manipulandum image which can be visually recognized by the user, within the respective manipulation recognition areas including the new manipulation recognition area.

In accordance with the above configuration, it is possible to provide a computer device which is capable of setting a new virtual manipulation section which allows a new function to be performed by the user's manipulation command input.

**Advantageous Effects of the Invention**

In accordance with the present invention, it is possible to provide a computer device, a storage medium, and a control method in which in a case where a user manipulates characters displayed on a touch screen via a virtual manipulation section (especially, manipulandum image) displayed on the display, the user can easily figure out another image located behind and overlapping with the virtual manipulation section.

**Brief Description of the Drawings**

[Fig. 1] Fig. 1 is a schematic external appearance view showing a portable video game machine as an example of a computer device according to an embodiment of the present invention.

[Fig. 2] Fig. 2 is a block diagram showing an internal configuration of the game machine of Fig. 1.

[Fig. 3] Fig. 3 is block diagram showing a functional configuration of a control section included in the game machine of Fig. 1.

[Fig. 4] Fig. 4 is a schematic view illustrating a game screen in which a player character and an enemy character are fighting in the game.

[Fig. 5] Fig. 5 is a schematic view illustrating a configuration screen in the game.

[Fig. 6] Fig. 6 is schematic views illustrating manipulation screen images displayed on a touch screen when display color information of a manipulandum image is changed before start of a game, in which Fig. 6(a) shows a first manipulation screen image and Fig. 6(b) shows a second manipulation screen image.

[Fig. 7] Fig. 7 is schematic views illustrating manipulation screen images displayed on the touch screen 2 when display color information of the manipulandum image is changed before start of the game, in which Fig. 7(a) shows a third manipulation screen image and Fig. 7(b) shows a fourth manipulation screen image.

[Fig. 8] Fig. 8 is schematic views illustrating manipulation screen images displayed on the touch screen 2 when display color information of the manipulandum image is changed before start of the game, in which Fig. 8(a) shows a fifth manipulation screen image and Fig. 8(b) shows a sixth manipulation screen image.

[Fig. 9] Fig. 9 is a flowchart showing operation of the game machine performed when a degree of transparency of a display color of the manipulandum image is changed.

[Fig. 10] Fig. 10 is a schematic view showing a screen image in the middle of proceeding of the game.

[Fig. 11] Fig. 11 is a schematic view showing a configuration screen image of the game machine.

[Fig. 12] Fig. 12 is a flowchart showing operation of the control section performed when a manipulation command is input to an input manipulation recognition area.

[Fig. 13] Fig. 13 is block diagram showing a functional configuration of a control section included in a game machine according to Embodiment 3.

[Fig. 14] Fig. 14 is a schematic view showing a function selection screen image of the game machine.

[Fig. 15] Fig. 15 is a flowchart showing operation of the control section when it is selected whether or not an overlapping recognition area is set as a new manipulation recognition area, and then a function is assigned to the overlapping recognition area.

## Description of the Embodiments

### (Embodiment 1)

Hereinafter, a computer device, a storage medium, and a control method according to an embodiment of the present invention will be described with reference to the drawings.

### [Configuration of hardware]

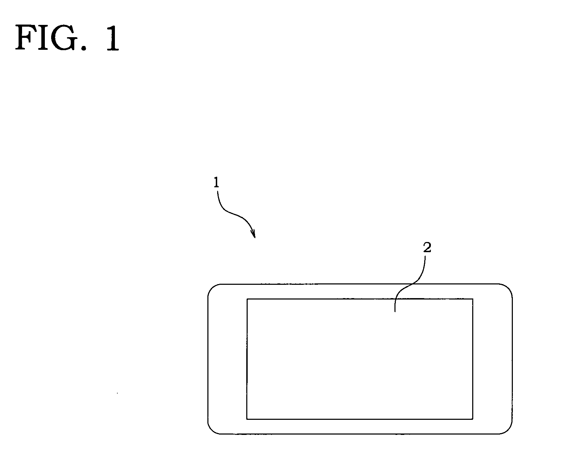

Fig. 1 is a schematic external appearance view showing a portable video game machine as an example of a computer device according to an embodiment of the present invention. The portable video game machine (hereinafter referred to as "game machine") 1 includes a touch screen 2 including a color liquid crystal panel and a touch panel in a center portion thereof. On the other hand, the game machine 1 does not include a physical manipulandum such as a physical button to be manipulated to proceed a game. By downloading a game program 5a and game data 5b via wireless communication or wire (cable) communication and executing the game program 5a, a user can play the game.

Note that the game illustrated in the game machine 1 of the present embodiment is an action game. The user manipulates a motion (action) of a player character present in a virtual game space to allow the player character to fight with an enemy character present in the virtual game space.

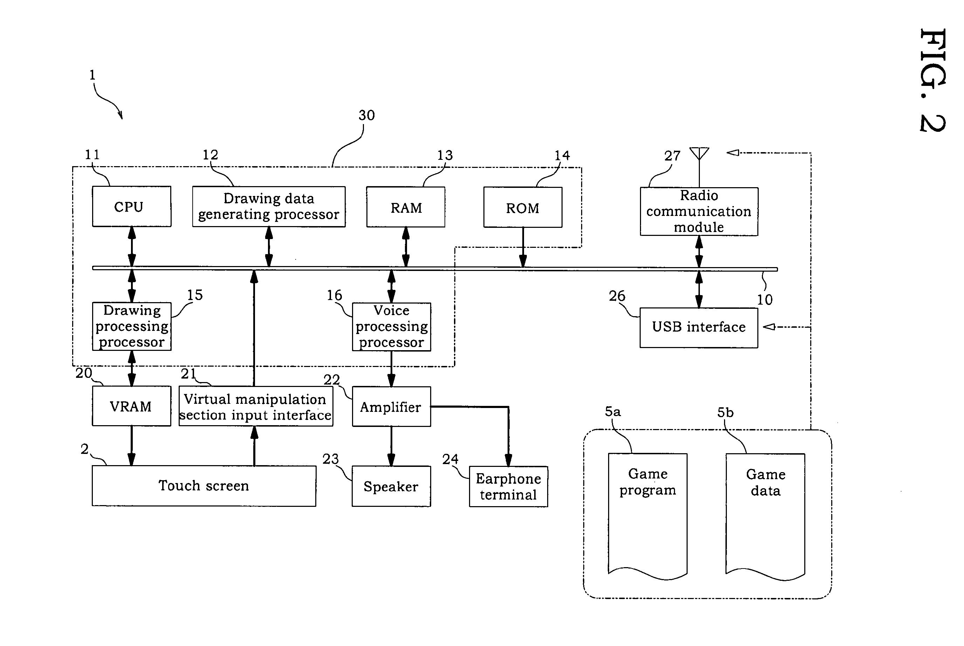

Fig. 2 is a block diagram showing an internal configuration of the game machine 1 of Fig. 1. As shown in Fig. 2, the game machine 1 includes a control section 30. The control section 30 includes a CPU 11, a drawing data generating processor 12, a RAM (Random Access memory) 13, a ROM (Read Only Memory) 14, a drawing processing processor 15, and a voice processing processor 16. The game machine 1 further includes a VRAM (Video-RAM) 20, a virtual manipulation section input interface 21, the above stated touch screen 2, an amplifier 22, a speaker 23, an earphone terminal 24, an USB (Universal Serial Bus) interface 26, and a wireless communication module 27. Among these components, the CPU 11, the drawing data generating processor 12, the RAM 13, the ROM 14, the drawing processing processor 15, the voice processing processor 16, the virtual manipulation section input interface 21, the USB interface 26, and the wireless communication module 27 are interconnected via a bus 10 to enable data transmission among them.

The USB interface 26 included in the game machine 1 connects the game machine 1 to another computer device via an USB cable. This enables the game machine 1 to load the game program 5a and the game data 5b from the connected computer device. The game program 5a is a program for allowing the game machine 1 to execute an action game having a content in which the player character and the enemy character fight within the virtual game space as described above. The game data 5b includes data required to execute the game. For example, the game data 5b includes various data such as image data of a background constituting the virtual game space, image data for displaying information such as a status, voice data such as effective sound or BGM, and message data in the form of letters or symbols.

The wireless communication module 27 performs data communication with another server device on Internet via wireless communication conforming with a communication standard such as HSPA (High Speed Packet Access). The wireless communication module 27 makes it possible to download the game program 5a and the game data 5b from another server device, and perform communication with another game machine 1. The game machine 1 of the present embodiment is capable of executing the action game based on the game program 5a and the game data 5b loaded via the USB interface 26 or the wireless communication module 27. In addition, the wireless communication module 27 enables the game machine 1 of the present embodiment to communicate with another game machine 1 via Internet, to fight with a character manipulated by another user.

The RAM 13 has a load area in which the game program 5a and the game data 5b loaded via the USB interface 26 or the wireless communication module 27 are stored, and a work area used to execute the game program 5a in the CPU 11. The ROM 14 contains a basic program of the game machine 1 such as a loading function via the USB interface 26 or the wireless communication module 27.

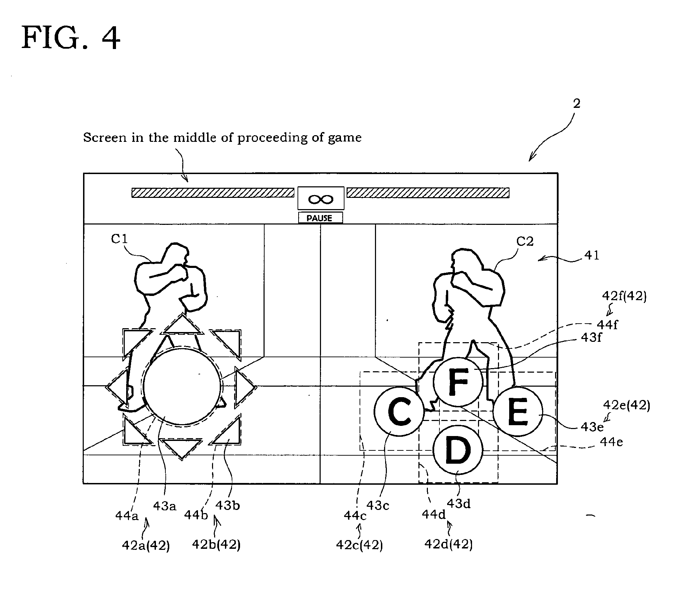

The CPU 11 controls proceeding of the game in such a manner that the CPU 11 executes the game program 5a loaded to the RAM 13 in response to the user's manipulation with respect to a virtual manipulation section 42 (see Fig. 4) as described later. More specifically, when the user performs the manipulation to input the manipulation command signal through the virtual manipulation section 42, the CPU 11 performs a specified game proceeding process corresponding to the manipulation command signal according to the game program 5a. The CPU 11 displays a result of the processing as an image (hereinafter referred to as "game image") representing proceeding of the game, on the touch screen 2. In addition, the CPU 11 outputs a voice signal (hereinafter referred to as "game voice") representing proceeding of the game, to the speaker 23 or the earphone terminal 24.

The drawing processing processor 15 performs drawing of the game image in accordance with an instruction executed by the CPU 11. That is, the CPU 11 decides a content of the game image to be displayed on the touch screen 2 based on the manipulation command signal input by the user. The drawing data generating processor 12 generates necessary drawing data corresponding to the content. Then, the CPU 11 transfers the generated drawing data to the drawing processing processor 15. The drawing processing processor 15 generates the game image once in every 1/60 second based on the drawing data and writes the generated game image to the VRAM 20. The touch screen 2 includes a semitransparent color liquid crystal display and a backlight LED (Light Emitting Diode), and displays the game image written to the VRAM 20.

The touch screen 2 includes an input means such as a touch panel provided on the liquid crystal display, in addition to the liquid crystal display and the backlight LED. When the user touches the touch screen 2 with a tip of the finger or the like, information corresponding to this touch position is input to the CPU 11 via the virtual manipulation section input interface 21 and the bus 10. As described later, manipulandum images 43 each imitating a physical manipulandum such as a button or a lever are displayed on the touch screen 2 (see Fig. 4). The user touches the touch screen 2 by manipulating the manipulandum image 43, and thus inputs a specified manipulation command via the manipulandum image 43.

Moreover, the CPU 11 decides a voice such as an effective sound and BGM to be output from the speaker 23, according to proceeding of the game. The CPU 11 reads out voice data for emitting the voice from the RAM 13 and inputs the voice data to the voice processing processor 16. Specifically, upon a sound emitting event occurring according to proceeding of the game, the CPU 11 reads out voice data (voice data contained in the game data 5b) corresponding to the sound emitting event from the RAM 13 and inputs the voice data to the voice processing processor 16. The voice processing processor 16 includes a DSP (Digital Signal Processor). The voice processing processor 16 provides a specified effect (e.g., reverb, chorus) to the voice data input by the CPU 11, then converts the voice data into an analog signal, and outputs the analog signal to the amplifier 22. The amplifier 22 amplifies a voice signal input from the voice processing processor 16, and then outputs the amplified voice signal to the speaker 23 and to the earphone terminal 24.

**[Functional configuration of control section]**

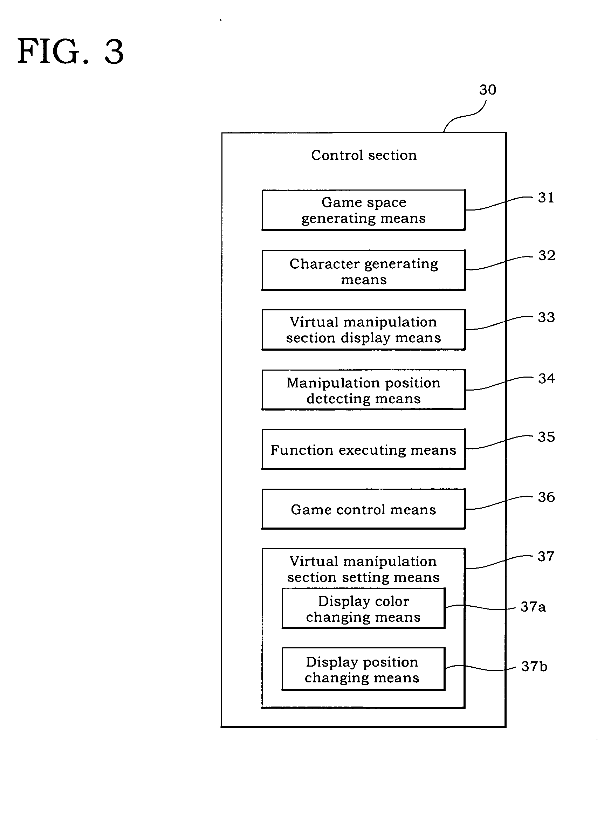

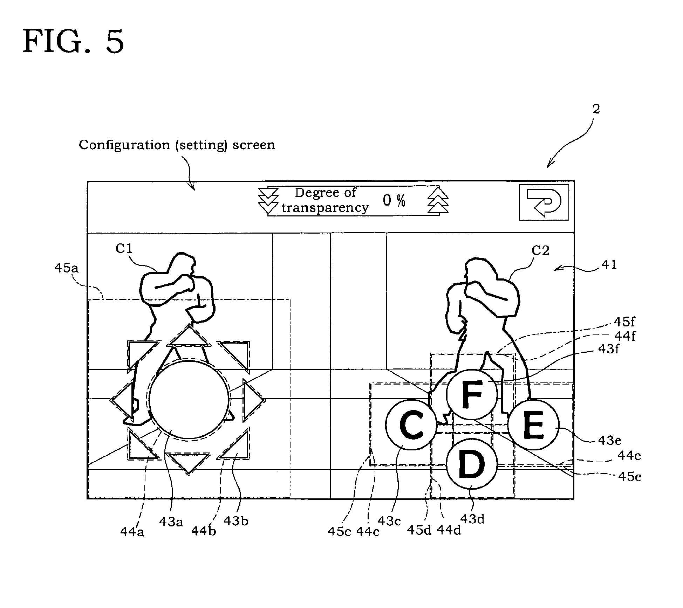

Fig. 3 is block diagram showing a functional configuration of the control section 30 included in the game machine 1. Fig. 4 is a schematic view illustrating a game screen in which a player character and an enemy character are fighting in the game (in the middle of proceeding of the game). Fig. 5 is a schematic view illustrating a configuration screen in the game. Hereinafter, a functional configuration of the control section 30 will be described with reference to Figs. 3 to 5.

As shown in Fig. 3, the control section 30 executes the loaded game program 5a. Thereby, the game machine 1 functions as a game space generating means (game space generating module) 31, a character generating means (character generating module) 32, a virtual manipulation section display means(virtual manipulation section display module) 33, a manipulation position detecting means (manipulation position detecting module) 34, a function executing means (function executing module) 35, a game control means (game control module) 36, and a virtual manipulation section setting means (virtual manipulation section setting module) 37. The virtual manipulation section setting module 37 includes a display color changing means (display color changing module) 37a and a display position changing means (display position changing module) 37b.

**<Game space generating means>**

Among the above stated components, as shown in Fig. 4, the game space generating means 31 generates data indicating a virtual game space 41 in which the player character C1 acts and outputs (displays) an image of the virtual game space 41 to the touch screen 2 based on the data. Note that the virtual game space 41 displayed on the touch screen 2 is not limited to a three-dimensional image having a depth which is taken by a virtual camera as shown in Fig. 4. That is, the virtual game space 41 may be a two-dimensional image or a monotone back image in which anything is not particularly drawn.

**<Character generating means>**

The character generating means 32 generates data of characters acting within the virtual game space 41, such as the player character C1 and the enemy character C2, and outputs (displays) images of the characters based on the generated data to the touch screen 2 as shown in Fig. 4. The images of the player character C1 and the enemy character C2 are displayed on an image in front of the image of the virtual game space 41. As shown in Fig. 4, the images of the characters are placed in front of the image of the virtual game space 41.

**<Virtual manipulation section display means>**

The virtual manipulation section display means 33 has a function of generating data indicating the virtual manipulation section 42 manipulated by the user and a function of outputting (displaying) the image of the virtual manipulation section 42 based on the data to the touch screen 2 as shown in Fig. 4. In the present embodiment, the virtual manipulation section 42 includes the manipulandum image 43, an input manipulation recognition area 44, and a setting manipulation recognition area 45.

Among the above, the manipulandum image 43 is an image imitating the physical manipulandum such as a button or a lever. In the middle of proceeding of the game, the user performs manipulation command input to the manipulandum image 43, thereby controlling the action of the player character C1. To this end, the manipulandum image 43 is displayed on the touch screen 2 so that the user visually recognize the manipulandum image 43 in the middle of proceeding of the game (i.e., in the middle of the fight between the player character C 1 and the enemy character C2). This allows the manipulandum image 43 to be displayed in a foremost image relative to the virtual game space 41 and the characters C1, C2.

As shown in Fig. 4, on the game screen of the present embodiment, a plurality of manipulandum images 43 (43a to 43f) corresponding to a plurality of virtual manipulation sections 42 (42a to 42f), respectively, are displayed. For example, the manipulandum image 43a of a lever-type which is represented by a manipulandum image in which a lever having a spherical upper end is viewed from above is displayed in a left corner on the screen. Around the manipulandum image 43a, 8 button-type manipulandum images 43b each forming an isosceles right triangle are displayed at substantially equal intervals (intervals of 45 degrees) on a circumference whose center is the manipulandum image 43a. At a right corner on the screen, 4 manipulandum images 43c to 43f each of which is represented by a manipulandum image in which a circular button is viewed from above are displayed in close proximity.

The input manipulation recognition area 44 is a range set to determine whether or not the user's manipulation command is input to the manipulandum image 43, in a case where the user performs manipulation command input to the manipulandum image 43, "in the middle of proceeding of the game" as shown in Fig. 4. If the position of the manipulation command input falls within this range, the game machine 1 determines that the user has performed manipulation command input to the corresponding manipulandum image 43. The input manipulation recognition area 44 is individually provided for each of the manipulandum images 43a to 43f.

Specifically, as shown in Fig. 4, an input manipulation recognition area 44a (indicated by broken line) is set for the lever-type manipulandum image 43a to indicate substantially the same range, and input manipulation recognition areas 44b (indicated by broken lines) are set for the manipulandum images 43b around the manipulandum image 43a to indicate substantially the same ranges. In addition, the rectangular input manipulation recognition area 44c (indicated by broke line) is set for the button-type manipulandum image 43c, to have a wider range than the button-type manipulandum image 43c and include the button-type manipulandum image 43c. Like the button-type manipulandum image 43c, the rectangular input manipulation recognition areas 44d to 44f (indicated by broken lines) are set for the button-type manipulandum images 43d to 43f, respectively. Therefore, if the user manipulates a position a little different from a drawing range of the manipulandum image 43c, when the user attempts to perform manipulation command input to the manipulandum image 43c, the game machine 1 recognizes that the manipulandum image 43c has been manipulated so long as it falls within the input manipulation recognition area 44c. Note that a line indicating the input manipulation recognition area 44 shown in Fig. 4 is not displayed on the touch screen 2 of the game machine 1 actually.

The setting manipulation recognition area 45 is a range set to determine whether or not the user's manipulation command is input to the manipulandum image 43, in a case where the user performs manipulation command input to the manipulandum image 43, "in the middle of configuring (setting)" as shown in Fig. 5. If the position of the manipulation command input falls within this range, the game machine 1 determines that the manipulation command is input to the corresponding manipulandum image 43 (the manipulandum image 43 is selected). The setting manipulation recognition area 45 is individually provided for each of the manipulandum images 43a to 43f.

Specifically, as shown in Fig. 5, one setting manipulation recognition area 45a (indicated by one-dotted line) is set for the lever-type manipulandum image 43a and the manipulandum images 43b around the manipulandum image 43a. The setting manipulation recognition area 45a has a rectangular wide range to include entire of the manipulandum image 43a and the manipulandum images 43b. By comparison, a rectangular setting manipulation recognition area 45c (indicated by one-dotted line) is set for the button-type manipulandum image 43c to have the substantially same range as that of the corresponding input manipulation recognition area 44c. In the same manner, rectangular setting manipulation recognition areas 45d to 45f (indicated by one-dotted lines) are set for the manipulandum images 43d to 43f to have the substantially same ranges as those of the corresponding input manipulation recognition areas 44d to 44f, respectively.

In the configuration screen as shown in Fig. 5, the user can move a tip of the user's finger while touching (selecting) the setting manipulation recognition area 45 on the screen. This enables the user to move the touched setting manipulation recognition area 45 together with the corresponding manipulandum image 43 and the corresponding input manipulation recognition area 44. Then, the user moves away the tip of finger from a surface of the touch screen 2 at a desired location, to change a location of the manipulandum image 43 and the like to the desired location.

The touch panel included in the touch screen 2 of the present embodiment employs a multi-touch type. The multi-touch type touch screen is defined as a touch panel which can individually recognize manipulation command inputs to touch points when the tips of the user's fingers and the like touch a plural locations (e.g., two locations) at the same time on the screen 2. Therefore, for example, on the configuration screen, the user touches a left end and a right end of a desired manipulation recognition area 45 with tips of two fingers at the same time and moves the tips of the two fingers close to and away from each other in this state, thereby changing a size of the corresponding manipulandum image 43 and/or the corresponding input manipulation recognition area 44 in a rightward and leftward direction, to a size corresponding to a distance between the tips of the two fingers. With similar manipulation, a vertical size of the corresponding manipulandum image 43 and/or the corresponding input manipulation recognition area 44 can be changed.

The above stated virtual manipulation section 42 is manipulated as described below in the middle of proceeding of the game (in the middle of fight) as shown in Fig. 4, to input a command for causing the player character C 1 to execute a specified action. For the lever-type virtual manipulation section 42a, the user touches the spherical manipulation image 43a with the tip of the user's finger and moves the spherical manipulation image 43a along the surface of the touch screen 2, while touching it with the tip of finger. In this way, the user moves the manipulation image 43a in the direction in which the finger is moving. This allows the user to move the lever-type virtual manipulation image 43a upward and downward, and rightward and leftward, as if the user manipulated a physical lever actually.

The manipulandum image 43a is an interface via which a command for causing the player character C 1 to change its direction or position is input. That is, the user manipulates the manipulandum image 43a as described above to command the player character C1 to execute an action for changing its direction or position, in a direction in which the manipulandum image 43a is moved. Therefore, when the manipulation command input is performed to move the manipulandum image 43a in this way, the control section 30 detects its moving direction. Thereby, the player character C1 changes its direction or moves in the direction corresponding to the detected moving direction. How the player character C1 changes its direction or moves is displayed as a motion picture on the touch screen 2 in such a manner that the character generating means 32 generates images representing its motion and sequentially draws the images at a predetermined rate (e.g., 60 frames per second).

The triangular manipulandum images 43b arranged around the manipulandum image 43a will be discussed. The manipulandum images 43b are different in how to manipulate from the manipulandum image 43a. A command indicating a similar content can be input to the manipulandum images 43b. Specifically, the manipulandum images 43b are of a button type. The user touches the manipulandum image 43b, and thereby the user's manipulation command is input to the control section 30. The control section 30 recognizes that the user's manipulated state is maintained from when the user touches the manipulandum image 43b until the user moves away the tip of finger from the manipulandum image 43b. Thus, the user can manipulate the manipulandum image 43b as if the user was manipulating a physical button actually. By manipulating one of the manipulandum images 43b, the user can command the player character C1 to change its direction or position, in a direction associated with that manipulandum image 43b (specifically, in a direction in which the manipulandum image 43b is present, on the basis of the spherical manipulation image 43a). Therefore, the user can change the direction or position of the player character C 1 by manipulating any one of the lever-type manipulation image 43a and the button-type manipulandum images 43b. The user can select how to use which is easy to the user.

The button-type manipulandum images 43c to 43f will be discussed. Like the manipulandum image 43b, by touching any one of the button-type manipulandum images 43c to 43f with the tip of the user's finger, this manipulation command can be input to the control section 30. By maintaining a touched state, this maintained sate can be input to the control section 30. By manipulating the manipulandum images 43c to 43f, the player character C1 is allowed to perform specified actions associated with the manipulandum images 43c to 43f, respectively. The actions include, for example, a punch action and a kick action associated with attack, a defense action, a jump action, etc.. The actions are assigned to the manipulandum images 43c to 43f, respectively.

**<Manipulation position detecting means>**

Then, the manipulation position detecting means 34 detects a manipulation position (touch point position) when the tip of the user's finger touches the touch screen 2. Specifically, the touch screen 2 includes an input means such as a touch panel on a surface thereof. When the tip of finger touches the input means, a touched surface (touched region) is detected. Data indicating the touched surface is input to the CPU 11 via the virtual manipulation section input interface 21. The CPU 11 obtains a gravity center position of the touched surface based on the input data, and detects a position on the display 2 corresponding to the gravity center position, as the manipulation position.

For example, when the tip of the user's finger touches the button-type manipulandum image 43c on the screen in the middle of proceeding of the game as shown in Fig. 4, the game machine 1 determines that the manipulandum image 43c has been manipulated, based on the gravity center position of the touched surface. Then, as described above, the player character C 1 performs the action associated with the manipulandum image 43c. For example, when the tip of the user's finger touches the setting manipulation recognition area 45c corresponding to the manipulandum image 43c, on the configuration screen as shown in Fig. 5, the game machine 1 determines that the setting manipulation recognition area 45c is selected based on the gravity center position on the touched surface. As described above, when the user moves the tip of finger, in this state, the setting manipulation recognition area 45c can be moved together with the corresponding manipulandum image 43c and the corresponding input manipulation recognition area 44c. It should be noted that the detecting method of the manipulation position is merely exemplary, and another method may be used so long as the user' manipulation position on the touch screen 2 is detectable.

**<Function executing means>**

The function executing means 35 executes a predetermined function (including the above stated action of the player character C1) associated with the manipulation command input in response to the user's manipulation of the virtual manipulation section 42. As described above, when the user manipulates the lever-type virtual manipulation section 42a or the button-type virtual manipulation section 42b, the function executing means 35 changes the direction or position of the player character C1 as the associated action. When the user manipulates any of the button-type virtual manipulation section 42c to 42f, the player character C1 performs the action of any of the punch, kick, defense, and jump.

**<Game control means>**

The game control means 36 proceeds the game in response to the user's manipulation on the virtual manipulation section 42. Specifically, when the user manipulates the virtual manipulation section 42 to cause the player character C 1 to act (move) in the middle of proceeding of the game as shown in Fig. 4, the game control means 36 decides an action of the enemy character C2 according to the action of the player character C 1. The enemy character C2 performs the action decided by the game control means 36. When the attack performed by the player character C 1 hits the enemy character, the game control means 36 executes effect processing, for example, sparkling, to visually highlight that the attack performed by the player character C 1 has hit the enemy character. When the player character C1 moves in response to the user's manipulation, the game control means 36 changes the image of the virtual game space 41 on the background by, for example, scrolling it in a horizontal direction. In addition, the game control means 36 executes various processing to proceed the game in response to the user's manipulation of the virtual manipulation section 42.

**<Virtual manipulation section setting means>**

The virtual manipulation section setting means 37 executes changing and setting for the above stated virtual manipulation section 42 (42a to 42f), according to the user's preference. The virtual manipulation section setting module 37 includes the display color changing means 37a and the display position changing means 37b.

The display color changing means 37a changes display color information of the manipulation image 43 (43a to 43f) displayed on the touch screen 2 in the middle of proceeding of the game. In the present embodiment, the display color information is a degree of transparency (display concentration) of the display color of the manipulation image 43. The display color changing means 37a changes the degree of transparency between 0% (perfect opaqueness) and 100% (perfect transparency), by using, for example, $\alpha$ blending which is a known art.

Specifically, in the present embodiment, the display color information of the image data representing the manipulandum image 43 has RGBA value including a combination of RGB value and $\alpha$ value indicating transparency degree information. RGB value (V) in an area where the manipulandum image 43 and the background image (image representing the character C1, C2 or the virtual game space 41) overlap with each other is determined according to the following formula using $\alpha$ value:

$$V = \alpha \cdot V1 + (1 - \alpha) \cdot V2 \ldots \text{(formula 1)}$$

In formula (1), V1 indicates the RGB value of the manipulandum image 43, and V2 indicates RGB value of the background image overlapping with the manipulandum image 43. Therefore, to make the manipulandum image 43 transparent, the $\alpha$ value is set smaller, while to make the manipulandum image 43 opaque, the $\alpha$ value is set greater. The display color changing means 37a can change the $\alpha$ value according to the user's manipulation as will be described later. The display color changing means 37a displays the manipulandum image 43 with a degree of transparency corresponding to the changed $\alpha$ value.

The display position changing means 37b changes the display position of the manipulandum image 43 on the touch screen 2, together with the corresponding input manipulation recognition area 44. This has been already described, and is a known art. Therefore, this will be described in brief. The display position changing means 37b recognizes that, when the user touches any one of the setting manipulation recognition areas 45 with the tip of finger, on the configuration screen as shown in Fig. 5, the touched setting manipulation recognition area 45 is selected. Then, when the user moves the tip of finger while maintaining the selected state (touched state), the display position changing means 37b moves the selected setting manipulation recognition area 45 according to the movement of the tip of finger. When it is determined that the tip of finger moves away from the touch screen 2 (selection finishes), the display position changing means 37b holds the manipulandum image 43 and the like together with the setting manipulation recognition area 45 on the position at which the tip of finger moves away from the touch screen 2. Thus, the display position changing means 37b changes the display position of the manipulandum image 43. In the course of changing the display position, regarding determination as to which one of the setting manipulation recognition areas 45 is selected, determination as to a moving direction and a moving speed, and determination as to whether or not the selection has finished, are performed based on a result of detection performed by the manipulation position detecting means 34.

**[Specific configuration of changing and setting of display color]**

In this game, as shown in Fig. 4, the image of the virtual game space 41 is the background, the player character C 1 and the enemy character C2 are displayed on the image in front of the image of the virtual game space 41, and further the manipulandum image 43 is displayed on the image in front of the image of the player character C 1 and the enemy character C2. Because of this, when the degree of transparency of the manipulandum image 43 is 0% (opaque), portions of the images of the player character C1 and the enemy character C2 and the image of the virtual game space 41, are in some cases, hidden by the manipulandum image 43 and cannot be visually recognized. As a solution to this, in the game machine 1, the degree of transparency of the manipulandum image 43 is changed by the user as described above so that the images overlapping with manipulandum image 43 can be visually recognized. Hereinafter, specific configuration for changing the display color of the manipulandum image 43 in the above stated game machine 1 will be described.

**<Changing and setting before start of game>**

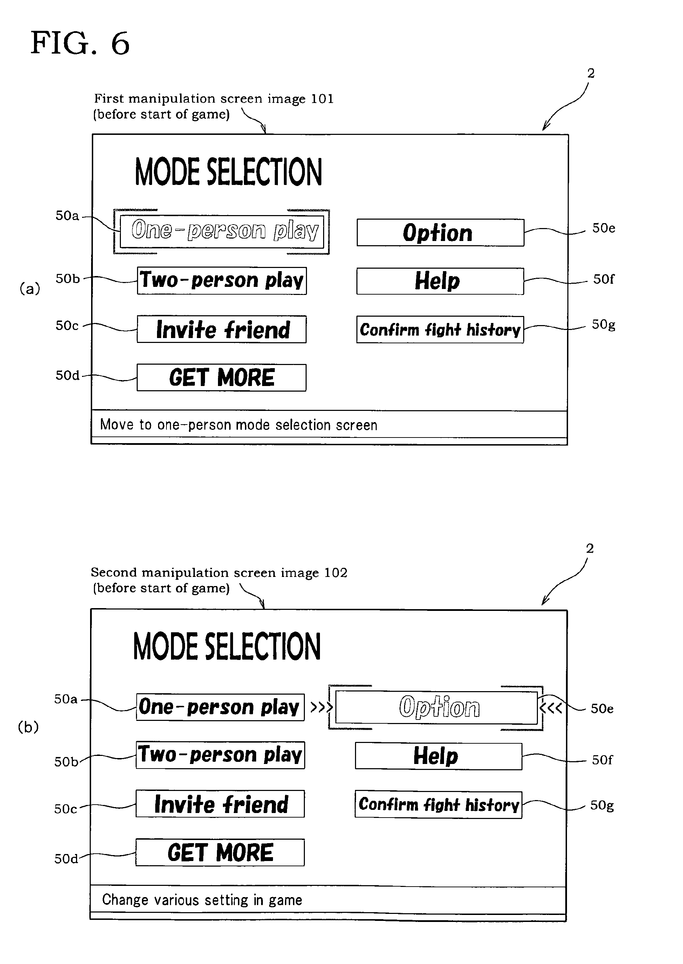

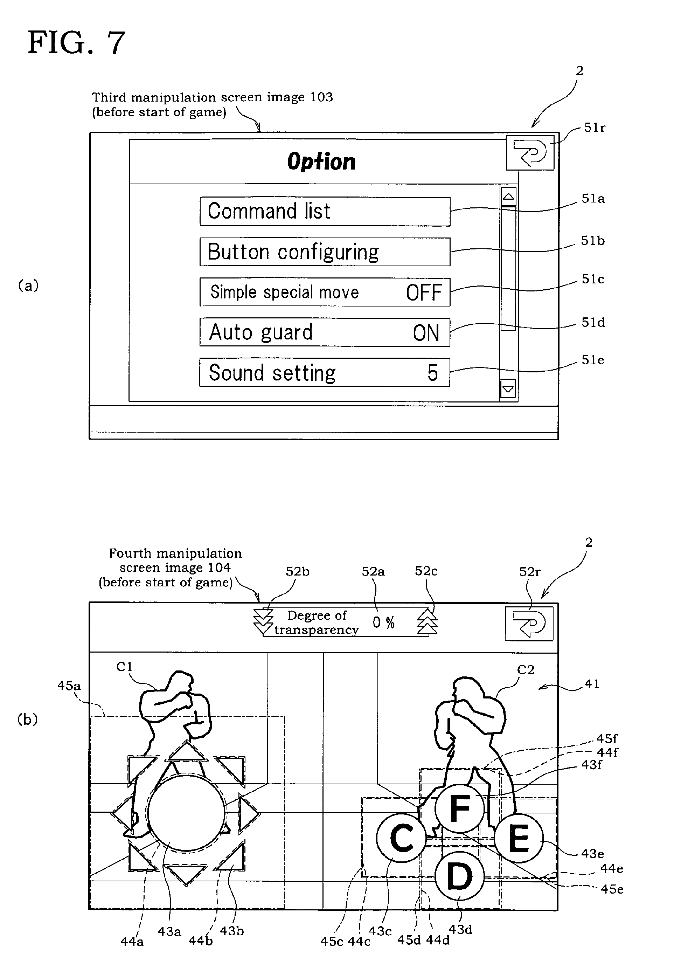

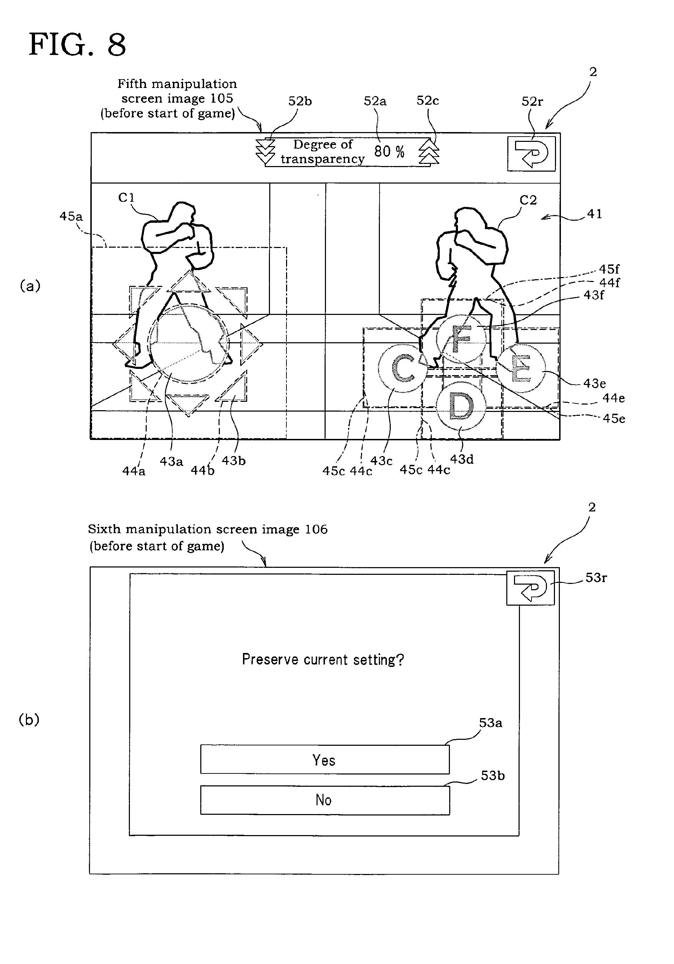

Figs. 6 to 8 are schematic views illustrating manipulation screen images displayed on the touch screen 2 when display color information of the manipulandum image 43 is changed before start of a game. Fig. 6(a) shows a first manipulation screen image and Fig. 6(b) shows a second manipulation screen image. Fig. 7(a) shows a third manipulation screen image and Fig. 7(b) shows a fourth manipulation screen image. Fig. 8(a) shows a fifth manipulation screen image and Fig. 8(b) shows a sixth manipulation screen image.

Initially, when the power supply of the game machine 1 is turned ON and the game program 5a is started, a first manipulation screen image 101 shown in Fig. 6(a) is displayed on the touch screen 2. The manipulation screen image 101 includes icons 50a to 50d for individually specifying a plurality of play modes (one-person play, two-person play, etc.), an icon 50e for selecting an option, an icon 50f for selecting a help reference, and an icon 50g for selecting past fight history confirmation. The user touches one of the icons 50a to 50g, and thereby the manipulation position detecting means 34 identifies the manipulation position, and detects the selected icon. The control section 30 executes the above processing corresponding to the detected icon (hereinafter the same occurs in the manipulation of the icon).

On the first manipulation screen image 101 shown in Fig. 6(a), any one of the above stated icons 50a to 50g is selectable. For example, when the icon 50a is selected, the game can be started with one-person play. When setting is performed for the virtual manipulation section 42, the user must select the icon 50e, as will be described later.

As shown in the second manipulation screen image 102 shown in Fig. 6(b), when the icon 50e for option is selected, the third manipulation screen image 103 shown in Fig. 7(a) is displayed on the touch screen 2 so as to replace the second manipulation screen image 102. The third manipulation screen image 103 is a screen on which setting items relating to elements in the middle of proceeding of the game are selected. The third manipulation screen image 103 includes an icon 51 a for selecting setting of a command list, an icon 51 b for selecting setting of the virtual manipulation section 42, and icons 51c to 51 e for selecting setting, etc.. When the display color is changed, the user must select the icon 51b displayed as "button configuring." Thereby, "fourth manipulation screen image (configuration screen) 104 shown in Fig. 7(b) is displayed on the touch screen 2 so as to replace the third manipulation screen image 103 which is a previous image. In a right upper portion of the third manipulation screen image 103, a return icon 51r is provided. The user manipulates the return icon 51r to re-display the second manipulation screen image 102 which a previous image of the third manipulation screen image 103 being currently displayed, so as to replace the third manipulation screen image 103.

The fourth manipulation screen image (configuration screen) 104 shown in Fig. 7(b) is a screen on which the user performs setting for the virtual manipulation section 42. The degree of transparency of the manipulandum image 43 can be adjusted on the fourth manipulation screen image 104. Specifically, on the fourth manipulation screen image 104, the virtual game space 41, the player character C1 and the enemy character C2 are displayed as in the case of display of proceeding of the actual game. The manipulandum image 43 is displayed to overlap with the virtual game space 41, the player character C1 and the enemy character C2 in front of them as in the case of display of proceeding of the actual game. And, a numeric value 52a indicating the degree of transparency (%) of the manipulandum image 43 at a current time (before adjustment) is displayed at the center of the upper portion of the touch screen 2 (0% in Fig. 7 (b)). An icon 52b manipulated to reduce the degree of transparency is provided at a left side of the numeric value 52a. An icon 52c manipulated to increase the degree of transparency is provided at a right side of the numeric value 52a.

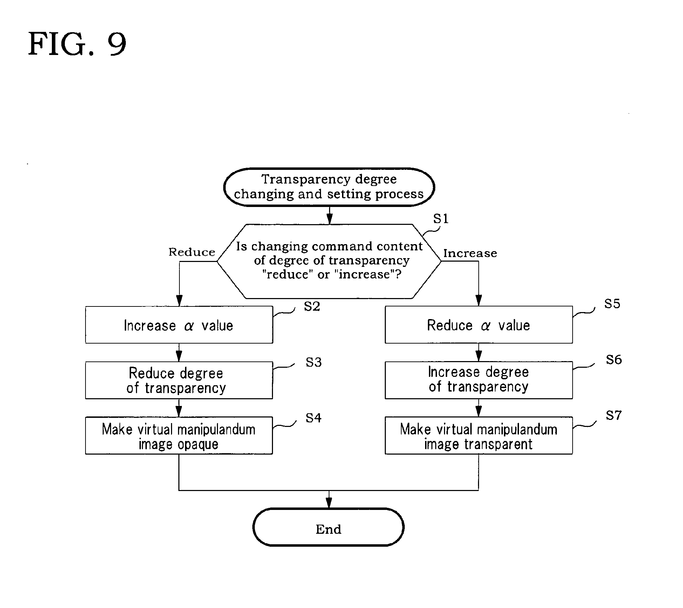

When either the icon 52b or 52c is manipulated, the control section 30 (to be precise, the display color changing means 37a) changes the degree of transparency of the display color of the manipulandum image 43 as described below. Fig. 9 is a flowchart showing operation of the control section 30 performed when the degree of transparency of the display color of the manipulandum image 43 is changed.

As shown in Fig. 9, the control section 30 determines which of the icons 52b, 52c has been manipulated, i.e., which of a command for reducing the degree of transparency and a command for increasing the degree of transparency has been input, based on a result of detection performed by the manipulation position detecting means 34 (step S1). If it is determined that the left icon 52b has been manipulated and the command for reducing the degree of transparency (making the display color of the manipulandum image 43 opaque) is input (step S1: "reduce"), the $\alpha$ value of the manipulandum image 43 is increased (see formula 1) according to the number of times or time of the user's touch on the icon 52b (step S2). At the same time, the numeric value 52a indicating the degree of transparency (%) displayed at the center of the upper portion of the touch screen 2 is displayed as reduced between 0% and 100% according to a change in the $\alpha$ value (step S3). At the same time, the manipulandum image 43 displayed on the touch screen 2 is changed to an opaque image corresponding to the increased $\alpha$ value (step S4).

If it is determined that the right icon 52c has been manipulated and the command for increasing the degree of transparency (making the display color of the manipulandum image 43 transparent) (step S1: "increase"), the $\alpha$ value of the manipulandum image 43 is reduced in the above described manner according to the number of times or time of the user's touch on the icon 52c (step S5). At the same time, the numeric value 52a indicating the degree of transparency (%) displayed at the center of the upper portion of the touch screen 2 is displayed as increased between 0% and 100% according to a change in the $\alpha$ value (step S6). At the same time, the manipulandum image 43 displayed on the touch screen 2 is changed to a transparent image corresponding to the reduced $\alpha$ value (step S7).

In this way, the user can visually recognize the degree of transparency of the manipulandum image 43 displayed, while manipulating the icon 52b, 52c. On the fourth manipulation screen image 104 of Fig. 7(b), the virtual game space 41, and the characters C1, C2 are displayed behind the manipulandum image 43. That is, the fourth manipulation screen image 104 is similar to an image in the middle of proceeding of the actual game. Therefore, when the degree of transparency of the manipulandum image 43 is changed, the user can specifically confirm how the image behind the manipulandum image 43 can be visually recognized in the middle of proceeding of the actual game.

For example, when the user manipulates the right icon 52c to increase the degree of transparency from the state (degree of transparency : 0%) shown in Fig. 7(b), the numeric value 52a indicating the degree of transparency increases as the manipulandum image 43 changes from the opaque state to the fifth manipulation screen image (configuration screen) 105 of Fig. 8(a). Concurrently with this, the degree of transparency of the manipulandum image 43 displayed on the touch screen 2 increases. As a result of this, as shown in the fifth manipulation screen image 105, it becomes possible to visually recognize the image of the characters C1, C2 and the image of the virtual game space 41 which have been located behind the manipulandum image 43, overlapping with the manipulandum image 43 and hidden by the manipulandum image 43. On the other hand, when the user manipulates the left icon 52b to reduce the degree of transparency in the state in which the degree of transparency is high, like the fifth manipulation screen image 105 of Fig. 8(a), the numeric value 52a indicating the degree of transparency reduces. Concurrently with this, the degree of transparency of the manipulandum image 43 reduces toward the state (opaque state) shown in Fig. 7(b). In this way, the degree of transparency of the manipulandum image 43 can be adjusted.

A return icon 52r is provided at a right upper portion of each of the fourth manipulation screen image 104 and the fifth manipulation screen image 105. When the user manipulates the return icon 52r, an event different from an event taking place as a result of the manipulation of the return icon 51r takes place. In this case, the manipulation screen image 103 which is a previous image is not re-displayed in a next step, but the six manipulation screen image 106 of Fig. 8(b) is displaced once. The manipulation screen image 106 is a screen which asks the user about whether or not the adjusted degree of transparency (changed setting content) is preserved, when the degree of transparency has been adjusted on the fourth manipulation screen image 104 or the fifth manipulation screen image 105.

The manipulation screen image 106 contains an icon 53a displayed as "Yes" to select that the adjusted degree of transparency is preserved, and an icon 53b displayed as "No" to select that the adjusted degree of transparency is not preserved. When the user selects the icon 53a displayed as "Yes," the adjusted degree of transparency is preserved, and the third manipulation screen image 103 (see Fig. 7(a)) is re-displayed. On the other hand, when the user selects the icon 53b displayed as "No," the adjusted degree of transparency is not preserved, and the third manipulation screen image 103 is re-displayed. In a right upper portion of the sixth manipulation screen image 106, a return icon 53r is provided. The user manipulates the return icon 53r to re-display the configuration screen just before shifting to the sixth manipulation screen image 106 so as to replace the sixth manipulation screen image 106. In this way, the manipulandum image 43 can be changed again.

In the above described manipulation, the user can change the degree of transparency of the manipulandum image 43 according to the user's preference. Further, the user performs the predetermined manipulation, to start the game. On a screen image in the middle of proceeding of the game, the manipulandum image 43 having the changed degree of transparency is displayed. The user manipulates the manipulandum image 43 with the tip of finger to control the action of the player character C 1 to play the game in which the player character C 1 fights with the enemy character C2.

**<Changing and Setting in the middle of proceeding of game>**

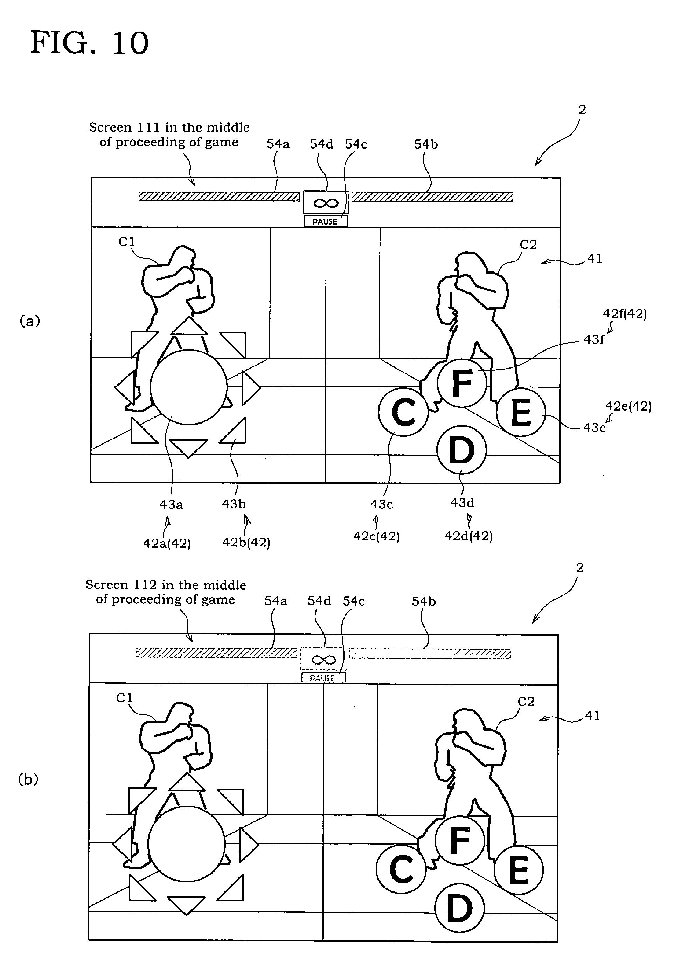

Next, a description will be given of a case where the display color information of the manipulandum image 43 is changed in the middle of proceeding of game. Fig. 10(a) is a schematic view showing the screen image in the middle of proceeding of the game. A screen image 111 in the middle of proceeding of the game as shown in Fig. 10(a) has a configuration similar to that of Fig. 4. The screen image 111 includes the image of the player character C 1 and the enemy character C2 which are present within the image of the virtual game space 41. In front of these images, the manipulandum images 43 (43a to 43f) are displayed.

On the screen image 111 in the middle of proceeding of the game as shown in Fig. 10(a), in addition to the above, a body strength gauge 54a indicating a body strength consumption amount of the player character C 1 and a body strength gauge 54b indicating a body strength consumption amount of the enemy character C2 are displayed. The body strength gauges 54a, 54b are gauges of a bar shape extending in a rightward and leftward direction. The body strength gauge 54a corresponding to the player character C 1 present at a left side is disposed at an upper left side of the touch screen 2. The body strength gauge 54b corresponding to the enemy character C2 present at a right side is disposed at an upper right side of the touch screen 2.

Furthermore, a pause icon 54c is provided at an upper center position of the screen image 111, to be more specific, in the vicinity of a middle between the left and right body strength gauges 54a, 54b, to pause the proceeding of the game and select setting of elements relating to proceeding of the game. When the user touches the pause icon 54c with the tip of finger in the middle of proceeding of the game, the manipulation screen image 103 shown in Fig. 7 (a) is displayed on the touch screen 2 so as to replace the screen image 111 in the middle of proceeding of the game. Therefore, by manipulating the third to sixth manipulation screen images 103 to 106 according to the above stated procedure, the degree of transparency of the manipulandum image 43 can be changed.

Even when the user pauses proceeding of the game and changes setting, the sixth manipulation screen image 106 is displayed. Therefore, the user selects whether or not to preserve the changed setting. When the user selects whether or not to preserve the changed setting (i.e., either the icon 53a or 53b is manipulated), the screen image 111 at the pause (see Fig. 10(a)) is re-displayed in the middle of the pause is re-displayed so as to replace the sixth manipulation screen image 106 and thus the user can proceed the game again in the state of the pause. When the display color information of the manipulandum image 43 is changed, the changed content is reflected on the display color of the manipulandum image 43 in the screen image 111 re-displayed. An indicator 54d disposed immediately above the pause icon 54c indicates a remaining time of the fight between the player character C 1 and the enemy character C2. In the example of Fig. 10(a), a symbol indicating infinity is displayed as the indicator 54d. This means that a time limit is not set for the fight.

As should be appreciated from the foregoing, in the game machine 1 of the present embodiment, the user can change the degree of transparency as the display color information of the manipulandum image 43. By setting the degree of transparency higher, the image located behind the manipulandum image 43 and overlapping with the manipulandum image 43 can be easily recognized in the middle of proceeding of the game. The degree of transparency can be changed on the manipulation screen images 104, 105 (see Figs. 7, 8) similar to the screen image 111 (Fig. 10(a)) in the middle of proceeding of the actual game. Thus, the degree of transparency can be set more surely according to the user's preference.

Although in the above description, the display color changing means 37a is capable of changing the degree of transparency of the manipulandum image 43, the display color information to be changed is not limited to the degree of transparency. The display color information may include one or a plurality of a color phase, a brightness, a chroma, a luminance, and an RGB. For example, the manipulandum image 43 may be changed such that the manipulandum image 43 is drawn with a color phase obtained by inverting a color phase of the image located behind and overlapping with the manipulandum image 43. This makes it possible to distinguish the manipulandum image 43 drawn with the inverted color from the background image and roughly visually recognize the background image overlapping with the manipulandum image 43, based on its color phase.

In the same manner, the brightness or chroma of the manipulandum image 43 may be changed to correspond to brightness or chroma of the background image being located behind and overlapping with the manipulandum image 43, respectively. Or, display color information including a suitable combination of the degree of transparency, the color phase, the brightness, and the chroma, may be changed for the manipulandum image 43. Note that the above stated color parameters may be adjusted by the conventionally known method, such as manipulation of parameter gauges or inputting of numeric values of parameters.

Or, the touch screen 2 may be provided with a touch pad which can recognize hand-written letters to allow the user to directly input the display color information such as the $\alpha$ value of the degree of transparency, in the form of numeric values. Or, instead of manipulating the icon 52b or 52c, or directly inputting the numeric value, a plurality of manipulandum images 43 set to have different predetermined degrees of transparency may be prepared and the user selects one from among the manipulandum images 43 on the configuration screen to specify the degree of transparency. Although in the present embodiment, the display color information of all of the manipulandum images 43 are changed all at once, the manipulandum images 43 may be individually selected, and only the display color information of the selected manipulandum image 43 may be changed.

Instead of the display color of only the manipulandum images 43, display color of another images displayed preferentially on the front side of the characters C1, C2 and the virtual game space 41, for example, the body strength gauges 54a, 54b of Fig. 10(a), may also be changed. Fig. 10(b) is a schematic view showing a screen image in the middle of proceeding of the game. A screen image 112 of Fig. 10(b) is an example in which the degree of transparency of body strength gauges 54a, 54b which are UI (user interface), the degree of transparency of the pause icon 54c which is UI, and the degree of transparency of the indicator 54d (UI) indicating a remaining time are set higher. The others are identical to those of the screen image 111 shown in Fig. 10(a). For the body strength gauges 54a, 54b, the pause icon 54c, and the indicator 54d indicating the remaining time, display color including the color phase, the brightness, and the chroma, in addition to the degree of transparency, may be changed as a matter of course. That is, by applying the present invention, display colors of all of the images displayed on the touch screen can be changed. In this case, the user can specify the UI whose degree of transparency should be changed on an option setting screen, and then change the degree of transparency of the UI. Or, the degrees of transparency of all of the UIs can be changed all at once. The manipulation for changing the degree of transparency of UI is the same as the manipulation for changing the degree of transparency of the virtual manipulation section 43. For example, in a case where the degree of transparency of the body strength gauges 54a, 54b is set to 100% and the user plays the game in a state in which the body strength gauges 54a, 54b are invisible, the remaining body strengths are not known, which allows the game to proceed in a tense atmosphere.

In a case where the user manipulates the manipulandum image 43 in a state in which the degree of transparency of the manipulandum image 43 is set to a predetermined value or greater (e.g., 50% or greater), the degree of transparency of the virtual manipulation section 43 may be set to the predetermined value or less for a specified period of time (e.g., several seconds). This allows the user to confirm which of the manipulandum images 43 was manipulated after the manipulation, even when the degree of transparency is set higher. In this case, instead of setting the degree of transparency of the manipulated manipulandum image 43 to the predetermined value or less, one or a plurality of the color phase, the brightness, and the chroma may be changed for a predetermined period of time. Or, the manipulated manipulandum image 43 and the manipulandum image 43 whose display color information is changed for a predetermined period of time may be made different. For example, when the lever-type manipulandum image 43a is manipulated in a direction, in Fig. 4, display color information of one manipulandum image 43b located in the direction may be changed for a predetermined period of time.

Although in the present embodiment, the proceeding of the game is paused when the display color information is changed in the middle of proceeding of the game, the present invention is not limited to this. For example, an icon corresponding to the icon 52a, 52b used to adjust the degree of transparency shown in Fig. 7(b) may be provided in a part of the screen image 111 in the middle of proceeding of the game as shown in Fig. 10. In this case, the user manipulates this icon, thereby changing the display color information such as the degree of transparency without pausing proceeding of the game.

The control section 30 of the game machine 1 of the present embodiment includes the display position changing means 37b. In the manipulation screen images (configuration screens) 104, 105 shown in Figs. 7(b) and 8(a), setting manipulation recognition areas 45 corresponding to the virtual manipulation sections 42, respectively are displayed.

Therefore, as described above, the user moves the tip of finger touching the setting manipulation recognition area 45, thereby changing the display position of the manipulandum image 43 on the touch screen 2 to the position corresponding to the tip of moved finger. Therefore, in addition to changing of the display color information as described above, the user moves the manipulandum image 43 to a position at which the user can visually recognize the characters C1, C2, and the like, without an obstruction (e.g., right lower corner or left lower corner of the touch screen 2), thereby allowing the characters C1, C2 and the like to be visually recognized easily in the middle of proceeding of the game.

As described above, the touch screen 2 of the present embodiment employs a multi-touch type. On the configuration screen, for example, the user touches a left end and a right end of a desired one manipulation recognition area 45 with tips of two fingers at the same time and moves the tips of the two fingers close to and away from each other in this state, thereby changing a size of the input manipulation recognition area 44 of the corresponding manipulandum image 43 in a rightward and leftward direction, to a size corresponding to a distance between the tips of the two fingers. Therefore, by changing the shape of the manipulandum image 43, in addition to changing the display color information and/or changing the display position as described above, the characters C1, C2 and the like in the middle of proceeding of the game can be visually recognized more easily. Although in the present embodiment, the manipulandum image 43 whose display color information can be changed is predetermined, the present invention is not limited to this. That is, the user can select the manipulandum image 43 whose display color information can be changed, and change only the display color information of the selected manipulandum image 43.

Although the game machine 1 of the present embodiment does not include any physical manipulandum in addition to the touch screen 2, the present invention is not limited to this. For example, a game machine may include physical manipulandum such as a button, for example. That is, the present invention is applicable to a computer device which displays a virtual manipulation section on a touch screen, even in the case of a computer device including physical manipulandum. The same applies to Embodiment 2 and Embodiment 3 described below.

**(Embodiment 2)**

As described above, the game machine 1 is capable of changing the position and shape of the input manipulation recognition area 44 of the virtual manipulation section 42. Therefore, in the game machine 1, the user suitably changes the input manipulation recognition area 44 and thereby easily manipulate the plurality of virtual manipulation sections 42 at the same time. Hereinafter, how to change the input manipulation recognition area 44 to easily perform simultaneous manipulation will be described. The configuration of the game machine 1 according to Embodiment 2 is the same as that of Embodiment 1 and will not be described herein.

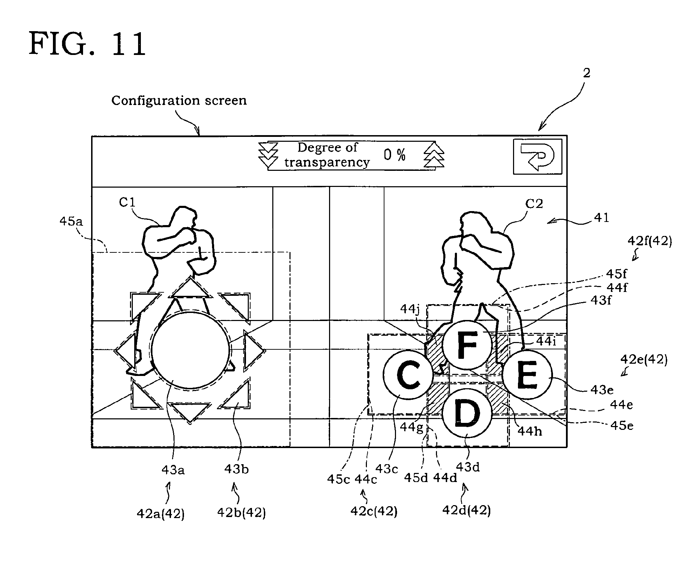

Fig. 11 is a schematic view showing a configuration screen image of the game machine 1, and the content illustrated here is identical to that of the fourth manipulation screen image 104 of Fig. 7(b). Regarding two virtual manipulation sections 42c, 42d displayed at a right lower region of the configuration screen of Fig. 11, the input manipulation recognition areas 44c, 44d corresponding to the two virtual manipulation sections 42c, 42d have an overlapping portion (hereinafter referred to as "overlapping recognition area 44g")(as being hatched in Fig. 11). In the same manner, overlapping recognition areas 44h, 44i, and 44j are present between the input manipulation recognition areas 44d, 44e, the input manipulation recognition areas 44e, 44f, and the input manipulation recognition areas 44f, 44c.

The user suitably changes the position and/or shape of each of the input manipulation recognition areas 44c to 44f, thereby changing the area of the corresponding one of the overlapping recognition areas 44g to 44j according to the user's preference. For example, if the user moves the input manipulation recognition area 44c to the left or reduces its size in the state shown in Fig. 11, it become possible to reduce the size of the area and shape of the overlapping recognition area 44g between the input manipulation recognition area 44c and the input manipulation recognition area 44d, and the area and shape of the overlapping recognition area 44j between the input manipulation recognition area 44c and the input manipulation recognition area 44f. If the user further moves the input manipulation recognition area 44c to the left and further reduces its size, the overlapping recognition area 44g, 44j can be caused to vanish.

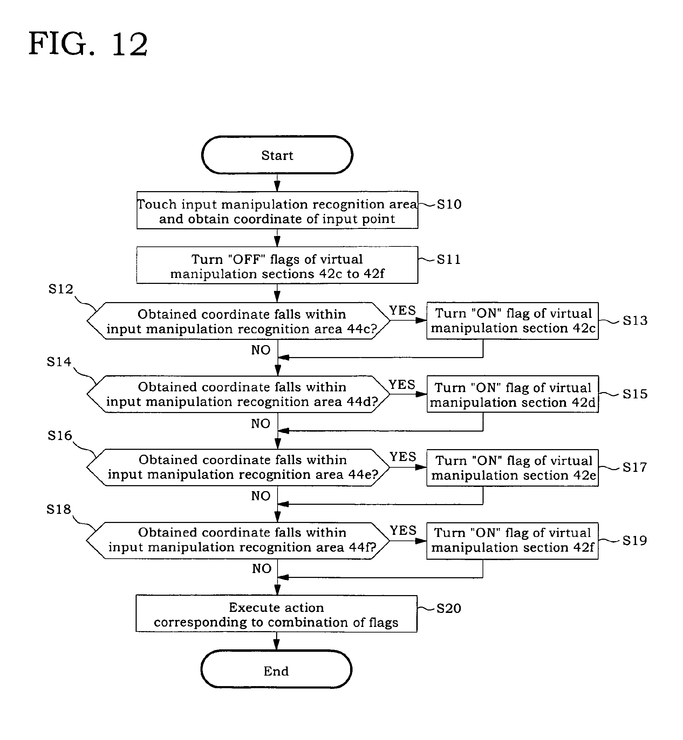

By comparison, in the game machine 1 of the present embodiment, when the user manipulates any one of the overlapping recognition areas 44g to 44j, it is recognized that the corresponding virtual manipulation sections 42 overlapping with each other are manipulated together at the same time. When the plurality of virtual manipulation sections 42 are manipulated together at the same time, the player character C1 performs a unique action different from the actions associated with the virtual manipulation sections 42, respectively. Fig. 12 is a flowchart showing operation of the control section 30 performed when a manipulation command is input to any one of the input manipulation recognition areas 44c to 44f. Hereinafter, the operation performed by the control section 30 in this case will be described with reference to Fig. 12.

As shown in Fig. 12, initially, when the user touches any one of the input manipulation recognition areas 44c to 44f on the touch screen 2, the control section 30 obtains a coordinate of that input point (step S10), and turns "OFF" flags set for the virtual manipulation sections 42c to 42f (step S11). Then, the control section 30 determines which of the input manipulation recognition areas 44c to 44f, the coordinate obtained in step S10 is included, which determination occurs sequentially. That is, the control section 30 determines whether or not the obtained coordinate is included in the input manipulation recognition area 44c (step S12). If it is determined that the obtained coordinate is included in the input manipulation recognition area 44c (step S12: YES), the control section 30 changes the flag of the virtual manipulation section 42c from "OFF" to "ON" (step S 13). If it is determined that the obtained coordinate is not included in the input manipulation recognition area 44c (step S12: NO), the control section 30 holds "OFF" of the flag of the virtual manipulation section 42c.

In the same manner, the control section 30 determines whether or not the obtained coordinate is included in the input manipulation recognition area 44d (step S 14). If it is determined that the obtained coordinate is included in the input manipulation recognition area 44d (step S 14: YES), the control section 30 changes the flag of the virtual manipulation section 42d to "ON" (step S15). If it is determined that the obtained coordinate is not included in the input manipulation recognition area 44d (step S14: NO), the control section 30 holds "OFF" of the flag of the virtual manipulation section 42d. Then, the control section 30 determines whether or not the obtained coordinate is included in the input manipulation recognition area 44e (step S16). If it is determined that the obtained coordinate is included in the input manipulation recognition area 44e (step S16: YES), the control section 30 changes the flag of the virtual manipulation section 42e to "ON" (step S 17). If it is determined that the obtained coordinate is not included in the input manipulation recognition area 44e (step S16: NO), the control section 30 holds "OFF" of the flag of the virtual manipulation section 42e. Further, the control section 30 determines whether or not the obtained coordinate is included in the input manipulation recognition area 44f (step S 18). If it is determined that the obtained coordinate is included in the input manipulation recognition area 44f (step S 18: YES), the control section 30 changes the flag of the virtual manipulation section 42f to "ON" (step S 19). If it is determined that the obtained coordinate is not included in the input manipulation recognition area 44f (step S 18: NO), the control section 30 holds "OFF" of the flag of the virtual manipulation section 42f.

In the above described manner, the control section 30 determines whether or not the obtained coordinate is included in each of the input manipulation recognition areas 44c to 44f (steps S 12, S 14, S16, S 18), and sets the flags based on the results of determination (steps S13, S15, S17, S19). Therefore, depending on which of the input manipulation recognition areas 44c to 44f, the coordinate of the input point is located, a combination of the flags of the virtual manipulation sections 42c to 42f is decided. For example, in a case where the coordinate is located in the overlapping recognition area 44g, a combination is provided in which the flags of the virtual manipulation sections 42c, 42d are "ON" and the flags of the virtual manipulation sections 42e, 42f are "OFF." Based on the combination of the flags decided as described above, the control section 30 performs a preset action corresponding to the combination (step S20).

For example, in the case of the above stated combination in which the flags of the virtual manipulation sections 42c, 42d are "ON" and the flags of the virtual manipulation sections 42e, 42f are "OFF," this means that the user's manipulation command input is simultaneous manipulation command input to the virtual manipulation sections 42c, 42d. Therefore, as an action associated with the combination of the flags, for example, the player character C 1 performs an action such as special move which is different from the actions performed when the virtual manipulation sections 42c to 42f are performed individually.

As described above, in the game machine 1 of the present embodiment, the input manipulation recognition areas 44 corresponding to the plurality of virtual manipulation sections 42 can be placed adjacent to each other such that the input manipulation recognition areas 44 overlap with each other. When the user manipulates the overlapping portion (overlapping recognition areas 44g to 44j), the control section 30 determines that the virtual manipulation sections 42 belonging to the overlapping portion are manipulated simultaneously. Therefore, for example, when the user can manipulate the two virtual manipulation sections 42c, 42d at the same time, the user has only to manipulate the overlapping recognition area 44g with the tip of one finger, without a need to manipulate the two virtual manipulation sections 42c, 42d with the tips of two fingers. Because of this, with respect to the manipulandum images 43 displayed in close proximity, the user can perform manipulation similar to simultaneous pushing with the tip of one finger with respect to physical manipulandums placed in close proximity. In other words, the user can perform intuitive simultaneous pushing similar to that in the case of using the physical manipulandum, with respect to the manipulandum images 43 placed in close proximity.

Since the user can perform simultaneous manipulation of the plurality of virtual manipulation sections 42 with the tip of one finger, the user can perform simultaneous manipulation of the plurality of virtual manipulation sections 42 on a touch screen of single-touch type.

In a case where the user manipulates the manipulandum images 43 with tips of two fingers on the touch screen of the multi-touch type, it is required that the two manipulandum images 43 be displayed to be spaced apart from each other with at least a distance between tips of two fingers fitted together. However, in accordance with the game machine 1, simultaneous manipulation using the tips of two fingers is unnecessary and simultaneous manipulation can be substantially performed using the tip of one finger. Because of this, the two manipulandum images 43 can be placed in close proximity.

Although in the present embodiment, the user changes the shape of the input manipulation recognition area 44 using tips of the two fingers, the present invention is not limited to this. Specifically, the input manipulation recognition areas 44 having various shapes may be prepared, and the user may select any one of the shapes on the configuration screen, thereby changing the shape. Or, in a case where the user places the plurality of input manipulation recognition areas 44 such that the input manipulation recognition areas 44 overlap with each other, the virtual manipulation section display means 33 may display new manipulandum images corresponding to the overlapping recognition area of the plurality of input manipulation recognition areas 44.

Instead of overlapping the two input manipulation recognition areas 44 as described above, three or more input manipulation recognition areas 44 may overlap with each other. Or, the manipulandum image 43 and the input manipulation recognition area 44 may be set within the same range. In this case, the overlapping recognition area may be set in an area where the plurality of manipulandum images 43 overlap with each other. Or, in a case where the plurality of input manipulation recognition areas 44 are placed in close proximity such that they form overlapping portion, the user may select whether or not the overlapping portion is to be set as the overlapping recognition area. For example, if the user selects that the overlapping portion is to be set as the overlapping recognition area, the user manipulates this overlapping portion to enable the simultaneous manipulation of the plurality of virtual manipulation sections 42. On the other hand, if the user selects that the overlapping portion is not to be set as the overlapping recognition area, the user can only place the virtual manipulation section 42 in close proximity.

Note that how to change the virtual manipulation section 42 of Embodiment 1 and how to perform simultaneous manipulation of Embodiment 2 which have been described above are not limited to those for the virtual manipulation section 42 manipulated in the middle of proceeding of the game. For example, the display color information of the icons 51a to 51 e displayed on the third manipulation screen image 103 shown in Fig. 7(a) may be changed or display color information of the other icons may be changed. Moreover, the present invention is applicable to objects other than the game machine. For example, the present invention is applicable to changing of display color information of a manipulandum image, in a case where the manipulandum image is displayed in front of a background image, on a touch screen of a ticket-vending machine.

**(Embodiment 3)**

In a case where the plurality of input manipulation recognition areas 44 overlap with each other, the user may select a function assigned to a manipulation command input to the overlapping portion. For example, in a case where the input manipulation recognition areas 44c, 44d overlap with each other, the user may select execution of functions (e.g., punch and kick) assigned to the virtual manipulation sections 42c, 42d, respectively, at the same time, or a new function (e.g., special move) different from these functions in response to the manipulation command input to the overlapping portion. Hereinafter, a configuration in which the user can select the function assigned to the overlapping recognition area will be described.

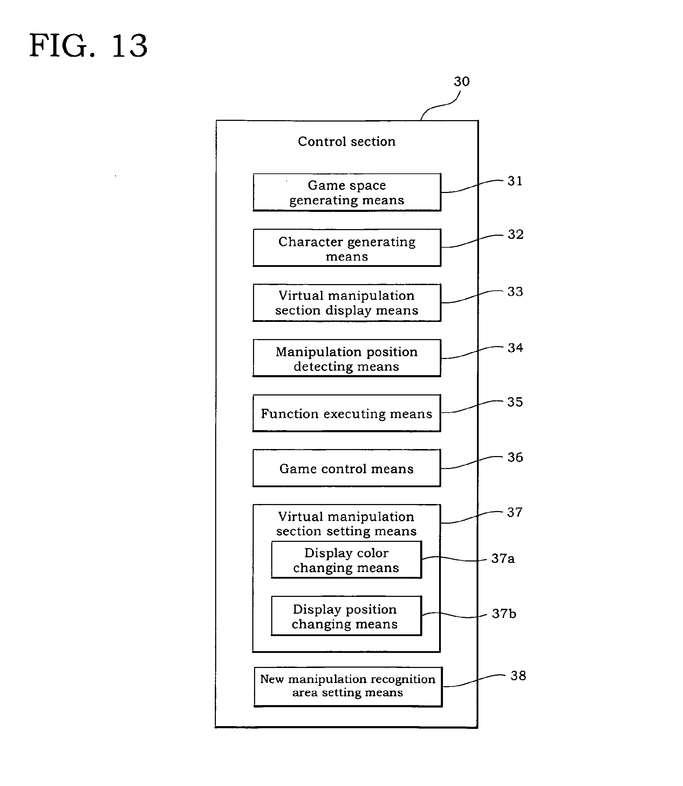

Fig. 13 is block diagram showing a functional configuration of the control section 30 included in the game machine 1 according to Embodiment 3. Since the internal configuration of the game 1 of the present embodiment is similar to that shown in Fig. 2, this will not be described in repetition. As shown in Fig. 13, the control section 30 of the game machine 1 of Embodiment 3 is identical to the configuration of the control section 30 of Embodiment 1, 2 as shown in Fig. 3, except that a new manipulation recognition area setting means (new manipulation recognition area setting module) 38 is added to the configuration of the control section 30 of Embodiment 1 and 2.

Note that provision of the virtual manipulation section setting means 37, i.e., function for changing the display color, position, and shape of the manipulandum image 43 is not essential but may be omitted. For example, it is supposed that the game machine 1 does not include the display position changing means 37b, but the positions of the input manipulation recognition areas 44 of the plurality of virtual manipulation sections 42 are fixed in initial setting. Even in this case, in a case where the plurality of input manipulation recognition areas overlap with each other to have the overlapping recognition area, the user can select the function assigned to the overlapping recognition area. By comparison, in a case where the game machine 1 can change the positions and/or shapes of the input manipulation recognition areas 44 and thereby form the overlapping recognition area in which the plurality of input manipulation recognition areas 44 overlap with each other, the user can select the function assigned to the overlapping recognition area. Hereinafter, the game machine 1 including the control section 30 including the virtual manipulation section setting means 37 will be described, for example.

For example, on the configuration screen image of Fig. 11, overlapping recognition areas 44g to 44j in which the plurality of input manipulation recognition areas (manipulation recognition areas) 44 overlap with each other are present. The new manipulation recognition area setting means 38 can set how to execute the function as commanded by the user, in response to the user's manipulation command input to the overlapping recognition areas 44g to 44j which are new manipulation recognition areas. The overlapping recognition area 44g which is the overlapping portion between the input manipulation recognition areas 44c, 44d, will be described in detail, in conjunction with the specific function of the new manipulation recognition area setting means 38. The same applies to the overlapping portions of the other input manipulation recognition areas 44.

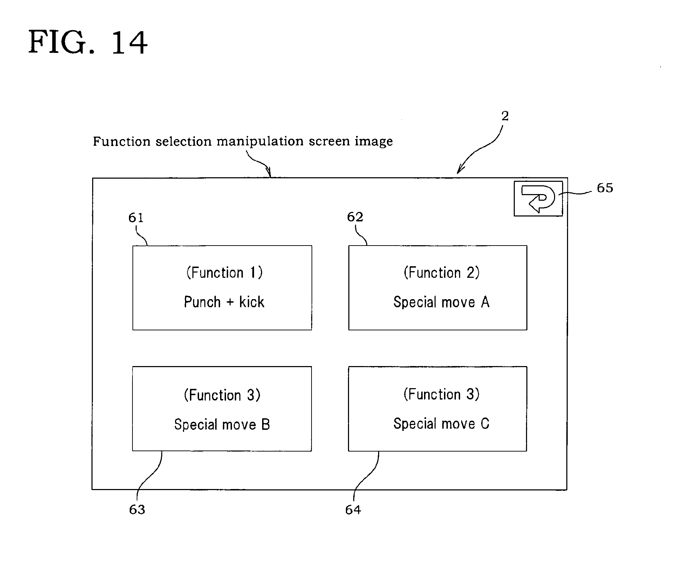

As shown in the configuration screen image of Fig. 11, the input manipulation recognition areas 44c, 44d, have the overlapping recognition area 44g in which the input manipulation recognition areas 44c, 44d overlap with each other. When the user touches and selects the overlapping recognition area 44g displayed on the configuration screen on the touch screen 2, a function selection screen shown in Fig. 14 is displayed. The user manipulates the function selection screen to select the function assigned to the overlapping recognition area 44g.

The function selection screen shown Fig. 14 is provided with icons 61 to 64 displaying four different functions 1 to 4, for example. As the function 1, a function for executing "punch" and "kick" at the same time, is illustrated. As the functions 2 to 4, functions executing "special move A," "special move B," and "special move C," respectively, which are different from each other, are illustrated. When the virtual manipulation section 42c corresponding to the input manipulation recognition area 44c is manipulated singly, the player character C 1 performs the "punch" action. When the virtual manipulation section 42d corresponding to the input manipulation recognition area 44d is manipulated singly, the player character C 1 performs the "kick" action. Therefore, the function 1 executes the functions assigned to the virtual manipulation sections 42c, 42d at the same time. In contrast, the functions 2 to 4 are pre-stored in the game program 5a, and are different from the functions (punch, kick) assigned to the virtual manipulation sections 42c, 42d, respectively.

The user touches any one of the icons 61 to 64 to select the corresponding one of the functions 1 to 4 displayed on the touch screen 2. When the user touches any one of the icons 61 to 64, the new manipulation recognition area setting means 38 accepts the corresponding one of the functions 1 to 4 (function selection accepting process). Then, the new manipulation recognition area setting means 38 assigns the selected function as the function executed when the overlapping recognition area 44g is manipulated (selected function register process).

In such a configuration, the user can select whether the new manipulation recognition area setting means 38 executes the functions (punch and kick) assigned to the virtual manipulation sections 42c, 42d at the same time (function 1) or a new function(e.g., any one of the special moves A to C) which is different from the former functions (any one of the functions 2 to 4). After the user selects any one of the functions on the function selection screen shown Fig. 14, the configuration screen of Fig. 11 is displayed on the touch screen 2 again, and the user can select any one of the other overlapping recognition areas 44h to 44j. As shown in Fig. 14, the function selection screen is provided with a return icon 65 in a right upper portion. By manipulating the icon 65, function setting to the overlapping recognition area 44g is paused, and the function selection screen can return to the configuration screen of Fig. 11.

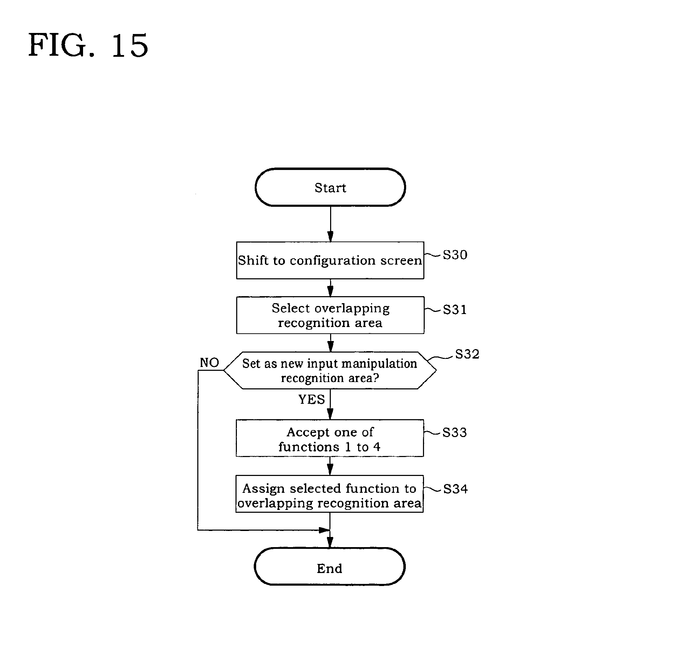

Alternatively, prior to the function selection accepting process in which the new manipulation recognition area setting means 38 accepts the selection of the function performed by the user, whether or not the overlapping recognition area 44g is set as a new manipulation recognition area may be decided according to the user's selection. Fig. 15 is a flowchart showing operation of the new manipulation recognition area setting means 38 which occurs when the function selected by the user is assigned to the overlapping recognition area 44g, including the process in which it is selected whether or not the overlapping recognition area 44g is set as the new manipulation recognition area.

As shown in Fig. 15, initially, the new manipulation recognition area setting means 38 displays the configuration screen shown in Fig. 11 (step S30). When the user touches and selects the overlapping recognition area 44g displayed on the configuration screen shown in Fig. 11 (step S31), a setting permitting/inhibiting selection screen image (not shown) on which the user selects whether or not the selected overlapping recognition area 44g is set as the new manipulation recognition area, is displayed on the touch screen 2. On this screen image, for example, a telop indicating a message stating "set as the new manipulation recognition area ?," an icon displaying "Yes" and an icon displaying "No" are displayed. The user touches and selects one of the icons to command the control section 30 operating as the new manipulation recognition area setting means 38 to set or not to set the overlapping recognition area 44g as the new manipulation recognition area.

When the user touches "Yes" icon (step S32: YES), the control section 30 accepts a command for setting the overlapping recognition area 44g as the new manipulation recognition area. Then, the control section 30 executes steps S33, S34 which are identical in content to the function selection accepting process and the selected function register process. On the other hand, when the user touches "No" icon (step S32: NO), the control section 30 accepts a command for inhibiting setting of the overlapping recognition area 44g as the new manipulation recognition area. Then, the control section 30 terminates the series of operation without step S33 and S34.

In the above configuration, the user can select whether or not the overlapping recognition area 44g is set as the new manipulation recognition area. Then, only when it is selected that the overlapping recognition area 44g is set as the new manipulation recognition area, the function selected by the user can be assigned to the new manipulation recognition area. This makes it possible to widen the user's choice as to how setting is performed with respect to the overlapping recognition area 44g. The setting permitting/inhibiting selection screen image is provided with a return icon in a right upper portion, and the user manipulates the icon to return to the configuration screen in Fig. 11.

Although as the function assigned to the overlapping recognition area 44g or the like, the player character C1 performs the actions "punch and kick," "special move A," "special move B," and "special move C" (Fig. 14), the present invention is in no way limited to this. For example, the user may be allowed to select so that a function for preferentially executing either one of the functions (punch and kick) assigned to the virtual manipulation sections 42c, 42d is assigned to the overlapping recognition area 44g. Or, a specific function may not be initialized in the icon 61 of Fig. 14, but instead, the configuration screen of Fig. 11 may be displayed when the user touches the icon 61, and the user can set a new function on the configuration screen. For example, on the configuration screen, the user may sequentially touch the virtual manipulation section 42b of a triangle whose apex is directed downward and the virtual manipulation section 42b of a triangle whose apex is directed rightward, and may then touch the virtual manipulation section 42c corresponding to the "punch" function displayed in "C," thereby setting a new function for causing the player character C 1 to "squat down and punch to the right" in the icon 61.

Or, the user may select a function for producing special effects and the like in addition to the function for causing the player character C 1 to perform the action. The special effects include an effect for restoring a body strength value of the player character C1 by a specified amount, an effect for enhancing a defense capability or an attack capability of the player character C1, an effect for diminishing a defense capability of the enemy character C2, etc.. Or, the user may be allowed to select a function having a content in which the actions, the special effects, and the like, are deactivated. For example, in a case where this function is assigned to the overlapping recognition area 44g, even if the tip of the user's finger touches the overlapping recognition area 44g inadvertently in the middle of proceeding of the game, the manipulation command input by the touch of the tip of the finger is ignored substantially, and any special function is not executed.

As described in Embodiment 2, a new manipulandum image may be displayed with respect to the overlapping recognition area. In that case, a display color and/or shape of the manipulandum image may be decided according to the function assigned to the overlapping recognition area. For example, the action functions and the special effect functions may be displayed by different colors. Or, the position, shape, and display color of the manipulandum image may be changed by the user's manipulation on the configuration screen of Fig. 5. In a case where the function assigned to the manipulation recognition area is "punch and kick" (function 1 in Fig. 14(a)), if a priority is preset between the punch and the kick, a successive technique in which the punch is done and then the kick is done immediately after the punch can be set by pushing the virtual manipulation section. This priority may be preset when the game program 5a is created or may be suitably set by the user's manipulation.

**Industrial Applicability**

The present invention provides a computer device, a storage medium, and a control method in which in a case where a user manipulates characters displayed on a touch screen via a manipulation section displayed on the display, the user can easily figure out images located behind and overlapping with the manipulation section.

**Reference Signs Lists**

1 game machine 1 (computer device)
2 touch screen
5a game program
30 control section
31 game space generating means
32 character generating means
33 virtual manipulation section generating means
34 manipulation position detecting means
35 function executing means
36 game control means
37 virtual manipulation section setting means
37a display color changing means
37b display position changing means
C 1 player character
C2 enemy character

**Claims**

1.  A computer device comprising:

a virtual manipulation section display module for displaying on a touch screen a virtual manipulation section which accepts a user's manipulation; and

a display color changing module for changing display color information of the virtual manipulation section in response to the user's manipulation.

2. The computer device according to Claim 1,
   wherein the display color information includes at least one of a degree of transparency, a color phase, a brightness, and a chroma.

3. The computer device according to Claim 2,
   wherein the display color information is the degree of transparency; and
   wherein the display color changing module changes the display color information of the virtual manipulation section to a content different from a setting content, for a predetermined period of time, when the user manipulates the virtual manipulation section in a state in which the degree of transparency is set to a predetermined value or greater.

4. The computer device according to any one of Claims 1 to 3, further comprising:

   a display position changing module for changing a display position of the virtual manipulation section on the touch screen, in response to the user's manipulation.

5. The computer device according to any one of Claims 1 to 4, further comprising:

   a shape changing module for changing a shape of the virtual manipulation section, in response to the user's manipulation.

6. The computer device according to any one of Claims 1 to 5, further comprising:

   a game control module for proceeding a game in response to the user's manipulation of the virtual manipulation section;
   wherein the display color changing module pauses proceeding of the game and accepts the user's manipulation about changing of the display color information, in the middle of proceeding of the game.

7. A storage medium containing instructions which are able to be executed by a control section of a computer device, the computer device being configured to read the instructions from the storage medium, the instructions causing the computer device to perform:

   a virtual manipulation section display step for displaying on a touch screen a virtual manipulation section which accepts a user's manipulation; and
   a display color changing step for changing display color information of the virtual manipulation section in response to the user's manipulation.

8. The storage medium according to Claim 7,
   wherein the display color information includes at least one of a degree of transparency, a color phase, a brightness, and a chroma.

9. The storage medium according to Claim 8,
   wherein the display color information is the degree of transparency; and
   wherein the display color changing step changes the display color information of the virtual manipulation section to a content different from a setting content, for a predetermined period of time, when the user manipulates the virtual manipulation section in a state in which the degree of transparency is set to a predetermined value or greater.

10. The storage medium according to any one of Claims 7 to 9,
    wherein the instruction causes the computer device to perform a display position changing step for changing a display position of the virtual manipulation section on the touch screen, in response to the user's manipulation.

11. The storage medium according to any one of Claims 7 to 10,
    wherein the instruction causes the computer device to perform a shape changing step for changing a shape of the virtual manipulation section, in response to the user's manipulation.

12. The storage medium according to any one of Claims 7 to 11,

wherein the instruction causes the computer device to perform a game control step for proceeding a game in response to the user's manipulation of the virtual manipulation section;

wherein the display color changing step pauses proceeding of the game and accepts the user's manipulation about changing of the display color information, in the middle of proceeding of the game

13. A method of controlling a computer device including a touch screen comprising:

a virtual manipulation section display step for displaying on the touch screen a virtual manipulation section which accepts a user's manipulation; and

a display color changing step for changing display color information of the virtual manipulation section in response to the user's manipulation.

14. The method of controlling the computer device according to Claim 13,
wherein the display color information includes at least one of a degree of transparency, a color phase, a brightness, and a chroma.

15. The method of controlling the computer device according to Claim 14,
wherein the display color information is the degree of transparency; and
wherein the display color changing step changes the display color information of the virtual manipulation section to a content different from a setting content, for a predetermined period of time, when the user manipulates the virtual manipulation section in a state in which the degree of transparency is set to a predetermined value or greater.

16. The method of controlling the computer device according to any one of Claims 13 to 15, further comprising:

a display position changing step for changing a display position of the virtual manipulation section on the touch screen, in response to the user's manipulation.

17. The method of controlling the computer device according to any one of Claims 13 to 16, further comprising:

a shape changing step for changing a shape of the virtual manipulation section, in response to the user's manipulation.

18. The method of controlling the computer device according to any one of Claims 13 to 17, further comprising:

a game control step for proceeding a game in response to the user's manipulation of the virtual manipulation section;

wherein the display color changing step pauses proceeding of the game and accepts the user's manipulation about changing of the display color information, in the middle of proceeding of the game.

FIG. 1

FIG. 2

EP 2 541 377 A1

# FIG. 3

30

Control section

| Game space generating means | 31 |

| Character generating means | 32 |

| Virtual manipulation section display means | 33 |

| Manipulation position detecting means | 34 |

| Function executing means | 35 |

| Game control means | 36 |

Virtual manipulation section setting means — 37

| Display color changing means | 37a |

| Display position changing means | 37b |

# FIG. 4

Screen in the middle of proceeding of game

2

C1

C2

41

42f(42)

44f

43f

F

C

E

42e(42)

43e

D

44e

44a

43a

44b

43b

42a(42)

42b(42)

44c

43c

44d

43d

42c(42)

42d(42)

PAUSE

∞

FIG. 5

Configuration (setting) screen

2

Degree of
transparency    0 %

45a

C1    C2    41

45f
44f
43f

F
C    E    43e
D    44e
45e

44a  43a  44b  43b    45c 44c  43c  45d 44d  43d

# FIG. 6

First manipulation screen image 101
(before start of game)

2

(a)

## MODE SELECTION

50a — *One-person play*

50b — **Two-person play**

50c — **Invite friend**

50d — **GET MORE**

**Option** — 50e

**Help** — 50f

**Confirm fight history** — 50g

Move to one-person mode selection screen

---

Second manipulation screen image 102
(before start of game)

2

(b)

## MODE SELECTION

50a — **One-person play** >>>

50b — **Two-person play**

50c — **Invite friend**

50d — **GET MORE**

*Option* <<< — 50e

**Help** — 50f

**Confirm fight history** — 50g

Change various setting in game

# FIG. 7

Third manipulation screen image 103
(before start of game)

(a)

**Option**

| Command list | | 51a |
| Button configuring | | 51b |
| Simple special move | OFF | 51c |
| Auto guard | ON | 51d |
| Sound setting | 5 | 51e |

51r
2

Fourth manipulation
screen image 104
(before start of game)

52b    52a    52c          52r          2

Degree of transparency    0 %

(b)

45a

C1          C2          41

45f
44f
43f

F
C   E
D

43e
44e
45e

44a  43a  44b  43b    45c 44c  43c  45d 44d  43d

# FIG. 8

Fifth manipulation
screen image 105
(before start of game)

52b    52a    52c              52r         2

(a)

Degree of
transparency    80 %

C1                                    C2        41

45a

45f
44f
43f

C

F

E        43e
44e
45e

D

44a    43a    44b    43b        45c 44c    45c 44c
43c              43d

Sixth manipulation screen image 106
(before start of game)                                    2

53r

(b)

Preserve current setting?

53a
Yes

53b
No

# FIG. 9

```
        ┌─────────────────────────────┐
        │   Transparency degree        │
        │ changing and setting process │
        └─────────────────────────────┘
                      │
                      ▼                      S1
         ╱─────────────────────────────╲
Reduce  │  Is changing command content  │  Increase
◄───────│    of degree of transparency  │───────►
        │      "reduce" or "increase"?  │
         ╲─────────────────────────────╱
      │            S2                          │            S5
      ▼                                        ▼
┌─────────────────────┐              ┌─────────────────────┐
│  Increase α value   │              │   Reduce α value    │
└─────────────────────┘              └─────────────────────┘
      │            S3                          │            S6
      ▼                                        ▼
┌─────────────────────┐              ┌─────────────────────┐
│    Reduce degree    │              │   Increase degree   │
│   of transparency   │              │   of transparency   │
└─────────────────────┘              └─────────────────────┘
      │            S4                          │            S7
      ▼                                        ▼
┌─────────────────────┐              ┌─────────────────────┐
│ Make virtual        │              │ Make virtual        │
│ manipulandum        │              │ manipulandum        │
│ image opaque        │              │ image transparent   │
└─────────────────────┘              └─────────────────────┘
      │                                        │
      └──────────────────┬─────────────────────┘
                         ▼
                 ┌───────────────┐
                 │      End      │
                 └───────────────┘
```

EP 2 541 377 A1

# FIG. 10

(a)

Screen 111 in the middle of proceeding of game

54a 54d 54c 54b

∞
PAUSE

C1 C2 41

42f(42)
43f

F
C E 42e(42)
43e
D

43a 43b 43c 43d
42a(42) 42b(42) 42c(42) 42d(42)

2

(b)

Screen 112 in the middle of proceeding of game

54a 54d 54c 54b

∞
PAUSE

C1 C2 41

F
C E
D

2

# FIG. 11

Configuration screen

2

Degree of transparency  0 %

C1                                    C2                      41

45a                                                          42f(42)

45f
44f
43f
44j                                   44i                    42e(42)

F

C         E                           43e

D         44h                         44e
44g                                   45e

43a    43b        43c   45d 44d   43d
45c 44c
42a(42) 42b(42)   42c(42)   42d(42)

# FIG. 12

```
                          ┌─────────────┐
                          │    Start    │
                          └──────┬──────┘
                                 ▼
        ┌──────────────────────────────────────────────┐
        │ Touch input manipulation recognition area    ├─ S10
        │ and obtain coordinate of input point          │
        └──────────────────┬───────────────────────────┘
                           ▼
        ┌──────────────────────────────────────┐
        │       Turn "OFF" flags of virtual     ├─ S11
        │    manipulation sections 42c to 42f    │
        └──────────────────┬───────────────────┘
   S12                     ▼
     ┌──────────────────────────────────────┐ YES  ┌─────────────────────────┐
     │    Obtained coordinate falls within   ├─────▶│  Turn "ON" flag of virtual ├─ S13
     │ input manipulation recognition area 44c? │    │ manipulation section 42c  │
     └──────────────────┬───────────────────┘      └────────────┬────────────┘
                      NO │◀───────────────────────────────────────┘
   S14                   ▼
     ┌──────────────────────────────────────┐ YES  ┌─────────────────────────┐
     │    Obtained coordinate falls within   ├─────▶│  Turn "ON" flag of virtual ├─ S15
     │ input manipulation recognition area 44d? │    │ manipulation section 42d  │
     └──────────────────┬───────────────────┘      └────────────┬────────────┘
                      NO │◀───────────────────────────────────────┘
   S16                   ▼
     ┌──────────────────────────────────────┐ YES  ┌─────────────────────────┐
     │    Obtained coordinate falls within   ├─────▶│  Turn "ON" flag of virtual ├─ S17
     │ input manipulation recognition area 44e? │    │ manipulation section 42e  │
     └──────────────────┬───────────────────┘      └────────────┬────────────┘
                      NO │◀───────────────────────────────────────┘
   S18                   ▼
     ┌──────────────────────────────────────┐ YES  ┌─────────────────────────┐
     │    Obtained coordinate falls within   ├─────▶│  Turn "ON" flag of virtual ├─ S19
     │ input manipulation recognition area 44f? │    │ manipulation section 42f  │
     └──────────────────┬───────────────────┘      └────────────┬────────────┘
                      NO │◀───────────────────────────────────────┘
                         ▼
        ┌──────────────────────────────────────┐
        │           Execute action              ├─ S20
        │  corresponding to combination of flags │
        └──────────────────┬───────────────────┘
                           ▼
                   ┌─────────────┐
                   │     End     │
                   └─────────────┘
```

# FIG. 13

```
                                                    30
                            ┌─────────────────────────────┐
                            │       Control section        │
                            │  ┌───────────────────────┐   │
                            │  │     Game space        │───┼──── 31
                            │  │  generating means     │   │
                            │  └───────────────────────┘   │
                            │  ┌───────────────────────┐   │
                            │  │  Character generating │───┼──── 32
                            │  │        means          │   │
                            │  └───────────────────────┘   │
                            │  ┌───────────────────────┐   │
                            │  │  Virtual manipulation │───┼──── 33
                            │  │ section display means │   │
                            │  └───────────────────────┘   │
                            │  ┌───────────────────────┐   │
                            │  │ Manipulation position │───┼──── 34
                            │  │   detecting means     │   │
                            │  └───────────────────────┘   │
                            │  ┌───────────────────────┐   │
                            │  │ Function executing means │─┼──── 35
                            │  └───────────────────────┘   │
                            │  ┌───────────────────────┐   │
                            │  │   Game control means  │───┼──── 36
                            │  └───────────────────────┘   │
                            │  ┌───────────────────────┐   │
                            │  │  Virtual manipulation │───┼──── 37
                            │  │ section setting means │   │
                            │  │ ┌───────────────────┐ │   │
                            │  │ │  Display color    │─┼───┼──── 37a
                            │  │ │ changing means    │ │   │
                            │  │ └───────────────────┘ │   │
                            │  │ ┌───────────────────┐ │   │
                            │  │ │ Display position  │─┼───┼──── 37b
                            │  │ │ changing means    │ │   │
                            │  │ └───────────────────┘ │   │
                            │  └───────────────────────┘   │
                            │  ┌───────────────────────┐   │
                            │  │New manipulation recognition│┼──── 38
                            │  │  area setting means   │   │
                            │  └───────────────────────┘   │
                            └─────────────────────────────┘
```

# FIG. 14

2

Function selection manipulation screen image

65

61

(Function 1)

Punch + kick

62

(Function 2)

Special move A

(Function 3)

Special move B

(Function 3)

Special move C

63

64

# FIG. 15

```
                    ┌─────────────────┐
                    │      Start       │
                    └─────────────────┘
                             │
                             ▼
         ┌──────────────────────────────┐
         │ Shift to configuration screen │ ～S30
         └──────────────────────────────┘
                             │
                             ▼
         ┌──────────────────────────────┐
         │    Select overlapping         │ ～S31
         │    recognition area           │
         └──────────────────────────────┘
                             │
                             ▼
  NO  ╱─────────────────────────────────╲  ～S32
 ◄────┤  Set as new input manipulation  │
      ╲         recognition area?        ╱
       ╲───────────────────────────────╱
  │                  │ YES
  │                  ▼
  │      ┌──────────────────────────────┐
  │      │      Accept one of            │ ～S33
  │      │      functions 1 to 4         │
  │      └──────────────────────────────┘
  │                  │
  │                  ▼
  │      ┌──────────────────────────────┐
  │      │  Assign selected function to  │ ～S34
  │      │  overlapping recognition area │
  │      └──────────────────────────────┘
  │                  │
  └──────────────────┤
                     ▼
           ┌─────────────────┐
           │       End        │
           └─────────────────┘
```

## INTERNATIONAL SEARCH REPORT

| | International application No. |
|---|---|
| | PCT/JP2011/001058 |

A.   CLASSIFICATION OF SUBJECT MATTER
*G06F3/041*(2006.01)i, *G06F3/048*(2006.01)i

According to International Patent Classification (IPC) or to both national classification and IPC

B.   FIELDS SEARCHED

Minimum documentation searched (classification system followed by classification symbols)
G06F3/033-3/041

Documentation searched other than minimum documentation to the extent that such documents are included in the fields searched
Jitsuyo Shinan Koho        1922–1996   Jitsuyo Shinan Toroku Koho   1996–2011
Kokai Jitsuyo Shinan Koho   1971–2011   Toroku Jitsuyo Shinan Koho   1994–2011

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| X | JP 2000-517445 A  (Via, Inc.), | 1,2,7,8,13, |
| | 26 December 2000 (26.12.2000), | 14 |
| Y | page 2, lines 6, 11 to 12, 14 to 15; page 8, | 3-5,9-11, |
| | lines 23 to 26; fig. 3 to 5 | 15-17 |
| A | & US 6121960 A       & EP 922275 A1 | 6,12,18 |
| | & WO 1998/009270 A1     & AU 4327597 A | |
| | & CA 2264167 A1       & AU 727387 B2 | |
| | & KR 10-2000-0035912 A   & KR 10-0627378 B1 | |
| Y | JP 2004-517391 A  (Intel Corp.), | 3-5,9-11, |
| | 10 June 2004 (10.06.2004), | 15-17 |
| A | paragraph [0012]; fig. 1 | 6,12,18 |
| | & US 6501464 B1       & GB 2384899 A | |
| | & EP 1332425 A1       & WO 2002/037254 A1 | |
| | & AU 9674301 A       & TW 591503 B | |
| | & CN 1505778 A | |

| ☒   Further documents are listed in the continuation of Box C. | ☐   See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 14 March, 2011 (14.03.11) | 22 March, 2011 (22.03.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2011/001058

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2005-204720 A  (Nintendo Co., Ltd.),<br>04 August 2005 (04.08.2005),<br>paragraphs [0081], [0095]<br>& US 2005/0227762 A1     & US 2009/0082107 A1 | 6,12,18 |

Form PCT/ISA/210 (continuation of second sheet) (July 2009)

**EP 2 541 377 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4243553 B